# EUROPÄISCHE PATENTSCHRIFT

(11) **EP 2 616 780 B1**
(45) Veröffentlichungstag und Bekanntmachung des Hinweises auf die Patenterteilung: **13.01.2021**
(21) Anmeldenummer: 11743543.8
(22) Anmeldetag: 12.08.2011
(51) Int. Cl.: G01F 1/84

(54) **MEßSYSTEM MIT EINEM MEßAUFNEHMER VOM VIBRATIONSTYP**
MEASUREMENT SYSTEM COMPRISING A VIBRATIONAL-TYPE MEASUREMENT SENSOR
SYSTÈME DE MESURE COMPORTANT UN CAPTEUR DE MESURE DU TYPE À VIBRATIONS

(30) Priorität: 16.09.2010 DE 102010045484
(43) Veröffentlichungstag der Anmeldung: 24.07.2013
(73) Patentinhaber: Endress+Hauser Flowtec AG, 4153 Reinach (CH)
(72) Erfinder: RIEDER, Alfred, 84032 Landshut (DE); ZHU, Hao, Freising 85354 (CN); BITTO, Ennio, 4147 Aesch (BL) (CH); SCHÜTZE, Christian, 4055 Basel (BS) (CH); HUBER, Christof, 3007 Bern (CH); BRAUN, Marcel, 79594 Inzlingen (DE)
(74) Vertreter: Andres, Angelika Maria
(86) Internationale Anmeldenummer: PCT/EP2011/063944
(87) Internationale Veröffentlichungsnummer: WO 2012/034797

(56) Entgegenhaltungen:
- EP-A1- 2 159 552
- WO-A1-02/052230
- WO-A2-96/08697
- DE-A1- 19 634 663
- DE-A1-102004 056 235
- DE-A1-102005 013 770

## Beschreibung

Die Erfindung betrifft ein Meßsystem mit einem Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, insb. zum Messen einer Dichte und/oder einer Massendurchflußrate, insb. auch eines über ein Zeitintervall totalisierten Gesamt-Massendurchflusses, eines in einer Rohrleitung zumindest zeitweise mit einer Massendurchflußrate von mehr als 400 t/h, insb. mehr als 1000 t/h, strömenden Mediums. Ferner betrifft die Erfindung ein Meßsystem mit einem solchen Meßaufnehmer.

In der Prozeßmeß- und Automatisierungstechnik werden für die Messung physikalischer Parameter, wie z.B. dem Massedurchfluß, der Dichte und/oder der Viskosität, von in Rohrleitungen strömenden Medien oftmals solche - zumeist als In-Line-Meßgeräte in Kompaktbauweise ausgebildeten - Meßsysteme verwendet, die mittels eines vom Medium durchströmten Meßaufnehmers vom Vibrationstyp und einer daran angeschlossenen Meß- und Treiberschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, insb. als Coriolis-Massedurchflußmesser oder Coriolis-Massedurchfluß-/Dichtemesser ausgebildete, Meßaufnehmer sind z.B. in der US-A 47 93 191, der US-A 48 23 614, der US-A 4831 885, der US-A 56 02 345, der US-A 2007/0151368, der US-A 2010/0050783, der WO-A 96/08697, der WO-A 2009/120222 oder der WO-A 2009/120223 zum Teil auch sehr ausführlich und detailliert beschrieben.

Meßaufnehmer der in Rede stehenden Art weisen ein Aufnehmer-Gehäuse auf, von dem ein einlaßseitiges erstes Gehäuseende zumindest anteilig mittels eines genau zwei jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines genau zwei jeweils voneinander beabstandeten Strömungsöffnungen aufweisenden zweiten Strömungsteilers gebildet sind. Wie in der US-A 56 02 345 oder der WO-A 96/08697 gezeigt kann das Aufnehmer-Gehäuse beispielsweise mittels eines, ggf. auch eher dickwandigen, kreiszylindrischen Rohres gebildet sein.

Zum Führen des zumindest zeitweise strömenden Mediums umfaßt jeder der vorgenannten Meßaufnehmer desweiteren jeweils zwei oder mehr - in der US-A 2010/0050783 bzw. der WO-A 96/08697 nämlich genau vier - strömungstechnisch parallel geschaltete, gerade Meßrohre aus Metall, beispielsweise Titan, Zirkon oder Tantal, die innerhalb des Aufnehmer-Gehäuses plaziert und darin mittels vorgenannter Strömungsteiler schwingfähig gehaltert sind.

Bei in der US-A 2010/0050783 bzw. der WO-A 96/08697 gezeigten Meßaufnehmern mit genau vier baugleichen und zueinander parallel verlaufenden geraden Meßrohren münden ein erstes der Meßrohre mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers, ein zweites der Meßrohre mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers, ein drittes der Meßrohre mit einem einlaßseitigen ersten Meßrohrende in eine dritte Strömungsöffnung des ersten Strömungsteilers und mit einem auslaßseitigen zweiten Meßrohrende in eine dritte Strömungsöffnung des zweiten Strömungsteilers, sowie ein viertes der Meßrohre mit einem einlaßseitigen ersten Meßrohrende in eine vierte Strömungsöffnung des ersten Strömungsteilers und mit einem auslaßseitigen zweiten Meßrohrende in eine vierte Strömungsöffnung des zweiten Strömungsteilers. Jeder der Strömungsteiler weist ferner jeweils einen Flansch mit einer Dichtfläche zum fluiddichten Anschließen des Meßaufnehmers an ein dem Zuführen von Medium zum bzw. dem Abführen von Medium vom Meßaufnehmer dienendes Rohrsegment der Rohrleitung auf.

Die Meßrohre von Meßaufnehmern vom Vibrationstyp werden zum Erzeugen oben genannter Reaktionskräfte - angetrieben von einer dem Erzeugen bzw. Aufrechterhalten von mechanischen Schwingungen, insb. von Biegeschwingungen, der Meßrohre im sogenannten Antriebs- oder Nutzmode dienenden Erregeranordnung - im Betrieb um eine jeweilige statische Ruhelage vibrieren gelassen. Die Schwingungen im Nutzmode sind zumeist, insb. bei Verwendung des Meßaufnehmers als Coriolis-Massedurchfluß- und/oder Dichtemesser, zumindest anteilig als laterale Biege-Schwingungen ausgebildet und im Falle von durch die Meßrohre hindurchströmendem Medium infolge von darin induzierten Corioliskräften durch zusätzliche, frequenzgleiche Schwingungen im sogenannten Coriolismode überlagert. Dementsprechend ist die - hier zumeist elektro-dynamische - Erregeranordnung derart ausgebildet, daß damit die zwei Meßrohre - im Fall von vier Meßrohren jeweils zwei der Meßrohre eines von zwei Meßrohrpaaren - im Nutzmode zumindest anteilig, insb. auch überwiegend, zu gegengleichen Biegeschwingungen in einer gemeinsamen Schwingungsebene - zumeist differentiell, durch Eintrag gleichzeitig entlang einer gemeinsamen Wirkungslinie, jedoch in entgegengesetzter Richtung wirkender Erregerkräfte - anregbar sind.

Zum Erfassen von Vibrationen der Meßrohre, nicht zuletzt auch den mittels der Erregeranordnung aktiv angeregten Schwingungen im Nutzmode, und zum Erzeugen von Vibrationen repräsentierenden Schwingungsmeßsignalen weisen die Meßaufnehmer ferner jeweils eine auf relative Bewegungen der Meßrohre reagierende, zumeist ebenfalls elektrodynamische Vibrationssensoranordnung auf. Typischerweise ist die Vibrationssensoranordnung mittels eines einlaßseitigen, Schwingungen der Meßrohre, wie u.a. auch in der US-A 2010/0050783 bzw. der WO-A 96/08697 gezeigt, differentiell - also lediglich relative Bewegungen der Meßrohre - erfassenden Schwingungssensors sowie eines auslaßseitigen, Schwingungen der Meßrohre differentiell erfassenden Schwingungssensors gebildet. Jeder der üblicherweise einander baugleichen Schwingungssensoren ist dabei mittels eines am ersten Meßrohr gehalterten Permanentmagneten und einer von dessen Magnetfeld durchfluteten, am zweiten Meßrohr gehalterten Zylinderspule gebildet.

Im Betrieb wird das vorbeschriebene - hier also mittels der zwei bzw. vier Meßrohre sowie der daran gehalterten Erreger- sowie Vibrationssensoranordnung gebildete - Innenteil des Meßaufnehmers mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine natürliche momentane Resonanzfrequenz des Innenteils gewählt, die wiederum im wesentlichen sowohl von Größe, Form und Material der Meßrohre als auch von einer momentanen Dichte des Mediums abhängig ist; ggf. kann diese Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Zum Definieren einer Nutz-Schwinglänge der Meßrohre und damit einhergehend zum Justieren des Nutzfrequenzbandes umfassen Meßaufnehmer der vorbeschriebenen Art ferner zumeist wenigstens ein einlaßseitiges Kopplerelement zum Bilden von einlaßseitigen Schwingungsknoten für gegengleiche Vibrationen, insb. Biegeschwingungen, der Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegengleiche Vibrationen, insb. Biegeschwingungen, der Meßrohre, das sowohl von beiden Strömungsteilern als auch vom einlaßseitigen Kopplerelement beabstandet an beiden Meßrohren fixiert ist. Dabei entspricht ein minimaler Abstand zwischen einlaßseitigem und auslaßseitigem - insoweit mit zum Innenteil gehörigen - Kopplerelementen der Nutz-Schwinglänge der Meßrohre. Mittels der Kopplerelementen kann zudem auch eine Schwingungsgüte des Innenteils wie auch die Empfindlichkeit des Meßaufnehmers insgesamt beeinflußt werden, in der Weise, daß für eine minimal geforderte Empfindlichkeit des Meßaufnehmers zumindest eine minimale Nutz-Schwinglänge bereitzustellen ist.

Die Entwicklung auf dem Gebiet der Meßaufnehmer vom Vibrationstyp hat inzwischen einen Stand erreicht, daß moderne Meßaufnehmer der beschriebenen Art praktisch für ein breites Anwendungsspektrum der Durchflußmeßtechnik höchsten Anforderungen hinsichtlich Präzision und Reproduzierbarkeit der Meßergebnisse genügen können. So werden solche Meßaufnehmer in der Praxis für Massendurchflußraten von nur einigen wenigen g/h (Gramm pro Stunde) bis zu einigen t/min (Tonnen pro Minute), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1%, wobei eine untere Grenze des garantierten Meßbereichs durchaus bei etwa 1% des Meßbereichsendwerts liegen kann. Aufgrund der hohen Bandbreite ihrer Einsatzmöglichkeiten werden industrietaugliche Meßaufnehmer vom Vibrationstyp mit nominellen Nennweiten (entspricht dem Kaliber der an den Meßaufnehmer anzuschließenden Rohrleitung bzw. dem Kaliber des Meßaufnehmers gemessen am Anschlußflansch) angeboten, die in einem Nennweitenbereich zwischen 1 mm und 250 mm liegen und bei maximaler nomineller Massendurchflußrate 2200 t/h jeweils für Druckverluste von weniger als 1 bar spezifiziert sind. Ein Kaliber der Meßrohre liegt hierbei etwa in einem Bereich zwischen 80 mm und 100 mm.

Trotzdem inzwischen Meßaufnehmer für den Einsatz in Rohrleitungen mit sehr hohen Massendurchflußraten und damit einhergehend sehr großem Kaliber von weit über 100 mm angeboten werden, besteht nach wie vor ein erhebliches Interesse daran, Meßaufnehmer von hoher Präzision und niedrigem Druckverlust auch für noch größer Rohrleitungskaliber, etwa 300 mm oder mehr, bzw. Massendurchflußraten, von 2500 t/h oder mehr, einzusetzen, etwa für Anwendungen der petrochemischen Industrie oder im Bereich des Transports und Umschlags von Erdöl, Erdgas, Treibstoffen etc.. Dies würde bei entsprechend maßstäblicher Vergrößerung der aus dem Stand der Technik, etwa den eingangs erwähnten US-A47 93 191, US-A 56 02 345, US-A 2007/0151368, WO-A 2009/120222 bzw. WO-A 2009/120223, bekannten und bereits etablierter Meßaufnehmerkonzepte mit zwei Meßrohren dazu führen, daß die, insb. den gewünschten Schwingungseigenschaften, der - nicht zuletzt auch zur Vermeidung allfälliger, für das Schwingungsverhalten der Meßrohre erheblicher Deformationen des Meßaufnehmers - erforderlichen mechanischen Belastungsfähigkeit sowie dem maximal erlaubten Druckverlust geschuldeten, geometrischen Abmessungen, insb. die einem Abstand zwischen den Dichtflächen beider Flansche entsprechende Einbaulänge exorbitant hohe Ausmaße annehmen würde. Damit einhergehend nimmt zwangsläufig auch die Leermasse des Meßaufnehmers zu, wobei konventionelle Meßaufnehmer großer Nennweite bereits mit einer Leermasse von etwa 400 kg realisiert werden. Weiterführende Untersuchungen, die für Meßaufnehmer mit zwei geraden Meßrohren hinsichtlich ihrer maßstäblichen Anpassung zu noch größeren Nennweiten durchgeführt worden sind, haben beispielsweise ergeben, daß für nominelle Nennweiten von mehr als 300 mm die Leermasse eines maßstäblich vergrößerten konventionellen Meßaufnehmers weit über 600 kg liegen würde einhergehend mit einer Einbaulänge von mehr als 3000 mm.

Im Falle der Verwendung von vier geraden Meßrohren kann infolge des bauartbedingten erhöhten Meßbereichsendwerts bzw. erweiterten Meßbereichs zwar zunächst durchaus eine gewisse Reduzierung der Einbaulänge des Meßaufnehmers bei gleicher nomineller Nennweite bzw. gleichem vom Meßaufnehmer provoziertem Druckverlust erreicht werden. Insoweit kann also ein leistungsfähigeres Meßsystem bereitgestellt werden, als es mit etablierten Meßaufnehmern mit zwei Meßrohren bei vergleichbarem technischen Aufwand möglich ist. Allerdings ist bei den aus dem Stand der Technik bekannten Meßaufnehmerkonzepten mit vier geraden Meßrohren zumindest bei größeren nominellen Nennweiten von über 100mm leider eine vergleichsweise höhere (Quer-) Empfindlichkeit des Nullpunkts für die Massendurchflußmessung auf via Rohrleitung von außen in den Meßaufnehmer eingetragenen mechanischen Wechsellasten, mithin Rohrleitungsvibrationen oder Druckschwankungen, zu verzeichnen. Diese erhöhte "mechanische" Nullpunktempfindlichkeit ist nicht zuletzt darauf zurückzuführen, daß im Vergleich zu Meßaufnehmern mit zwei Meßrohren gleicher nomineller Nennweite bzw. vergleichbarem Strömungswiderstand einerseits ein größere Angriffsfläche, über die Schwingungen der Meßrohre von außen wirksam beeinflußbar sind - hier nämlich praktisch der gesamte im Betrieb von Medium angeströmte Querschnitt jedes der Strömungsteiler -, und anderseits infolge des im Vergleich zu herkömmlichen Strömungsteilern nachgiebigeren Strömungsteiler eine wirksamere Kopplung für äußerer mechanische Störungen geschaffen sind. Eine Möglichkeit, diese erhöhte Nullpunktempfindlichkeit zu beseitigen, besteht nunmehr darin, das Aufnehmergehäuse entsprechend zu versteifen, mithin dessen Wandstärken zu erhöhen und/oder zusätzliche Versteifungselemente vorzusehen. Im Ergebnis dessen würde aber zwangläufig auch wieder die Leermasse des Meßaufnehmers in erheblichem Maße steigen, mithin ein Masse-zu-Nennweite-Verhältnis des Meßaufnehmers, definiert durch ein Verhältnis der Leermasse des Meßaufnehmers zur nominellen Nennweite des Meßaufnehmers, verschlechtert, und zwar in einem Maße, daß Meßaufnehmer mit vier geraden Meßrohren gegenüber konventionellen Meßaufnehmern nicht mehr nennenswert besser, wenn nicht sogar schlechter gestellt sind.

Ausgehend vom oben genannten Stand der Technik besteht daher eine Aufgabe der Erfindung darin, mittels Meßaufnehmer vom Vibrationstyp gebildete Meßsysteme dahingehend zu verbessern, daß sie auch bei großer nomineller Nennweite von über 100mm und möglichst geringer Leermasse, mithin bei einem akzeptablen Masse-zu-Nennweite-Verhältnis von kleiner als 2 kg/mm, einen stabilen, via Rohrleitung möglichst wenig beeinflußbaren Nullpunkt für Massendurchfluß aufweisen. Darüberhinaus soll das mittels des Meßaufnehmers gebildete Meßsystem möglichst keine Querempfindlichkeit auf allfällige Änderungen von Spannungszuständen im Meßaufnehmer, etwa infolge von Temperaturänderungen bzw. -gradienten innerhalb des Meßaufnehmers aufweisen. Zudem soll der Meßaufnehmer, mithin das damit gebildete Meßsystem auch beim Einsatz in Anwendung mit großen Massendurchflußraten von mehr als 400 t/h möglichst kompakt gebaut sein und selbst nur geringe Druckverluste von weniger als 2bar verursachen.

Zur Lösung der Aufgabe besteht die Erfindung in einem Meßsystem gemäß Anspruch 1, und dem Verwenden des Meßsystems gemäß Anspruch 10. Vorteilhafte Ausgestaltungen des erfindungsgemäßen Meßsystems sind in den abhängigen Ansprüchen 2-9 angegeben.

Ein Grundgedanke der Erfindung besteht darin, anstelle der bei konventionellen Meßaufnehmern großer Nennweite verwendeten zwei parallel durchströmten Meßrohre vier parallel durchströmte gerade Meßrohre zu verwenden, und so einerseits eine optimale Ausnutzung des begrenzten Platzangebotes zu ermöglichen, anderseits einen akzeptablen Druckverlust über einen weiten Meßbereich, insb. auch bei sehr hohen Massendurchflußraten von weit über 400 t/h, bei nach wie vor sehr hoher Meßgenauigkeit gewährleisten zu können. Dies wird beim erfindungsgemäßen Meßsystem nicht zuletzt dadurch erreicht, daß als Nutz-Mode, nämlich die zum Zwecke der Messung von Massedurchfluß bzw. Dichte aktive angeregten Schwingungen der Meßrohre, ein der Rohranordnung innenwohnende, im weiteren gelegentlich als V-Mode bezeichnete, natürliche Biegeschwingungsmode erste Art dient, in dem das erste und zweite Meßrohr bezüglich der zweiten gedachten Längsschnittebene gegengleiche Biegeschwingungen um die jeweilig zugehörige statische Ruhelage ausführen, und in dem das dritte und vierte Meßrohr bezüglich der zweiten gedachten Längsschnittebene gegengleiche Biegeschwingungen um die jeweilige statische Ruhelage ausführen, derart, daß, bezüglich der zweiten gedachten Längsschnittebene, nämliche Biegeschwingungen des ersten Meßrohrs auch gegengleich zu nämlichen Biegeschwingungen des dritten Meßrohrs sind, und daß, bezüglich der zweiten gedachten Längsschnittebene, nämliche Biegeschwingungen des zweiten Meßrohrs auch gegengleich zu nämlichen Biegeschwingungen des vierten Meßrohrs sind. Bei nämlichen V-Mode konnte für Meßaufnehmer der in Rede stehenden eine sehr hohe Schwingungsgüte festgestellt werden, dies nicht zuletzt auch infolge einer erheblich geringer ausfallenden Dissipation von Schwingungsenergie aus dem Meßaufnehmer in die daran angeschlossene Rohrleitung, etwa infolge von eigentlich unerwünschten Deformationen der Strömungsteiler. Darüberhinaus weisen die dem V-Mode entsprechenden Schwingungen der Meßrohre, mithin die damit korrespondierenden Schwingungsmeßsignale auch eine - im Vergleich zu herkömmlichen Meßaufnehmer - erheblich verringerte Druckstoß- bzw. Schallabhängigkeit auf. Dies nicht zuletzt auch in Anwendungen mit betriebgemäß weit schwankendem Temperaturbereich von mehr als 100K Schwankungsbreite und/oder in Anwendung mit starken mechanischen Beanspruchung des Meßaufnehmers, etwa infolge von axialen oder auch asymmetrisch auf den Meßaufnehmer wirkenden Rohrleitungskräften. Darüber hinaus kann beim erfindungsgemäßen Meßsystem der sich aus dem Gesamtquerschnitt der vier Meßrohre ergebende effektive Strömungsquerschnitt des Innenteils im Vergleich zu herkömmlichen nur zwei Meßrohre aufweisenden Meßaufnehmern gleicher nomineller Nennweite und gleicher Leermasse ohne weiteres um mehr als 20% erhöht werden. Ein weiterer Vorteil des erfindungsgemäßen Meßaufnehmers besteht ferner darin, daß überwiegend etablierte Konstruktionskonzepte, wie etwa hinsichtlich der verwendeten Materialien, der Fügetechnik, der Fertigungsabläufe etc., angewendet werden können oder nur geringfügig modifiziert werden müssen, wodurch auch die Herstellkosten insgesamt durchaus vergleichbaren zu denen herkömmlicher Meßaufnehmer sind. Somit wird durch die Erfindung nicht nur eine Möglichkeit geschaffen, vergleichsweise kompakte Meßaufnehmer vom Vibrationstyp auch mit großer nomineller Nennweite von über 100 mm, insb. mit einer Nennweite von größer 250 mm, mit handhabbaren geometrischen Abmessungen und Leermassen zu konstruieren, sondern dieses zudem auch ökonomisch sinnvoll realisieren zu können. Das erfindungsgemäße Meßsystem ist aufgrund seiner potentiell großen nominellen Nennweite einerseits und seinem relative geringen Druckverlust anderseits besonders zum Messen von strömungsfähigen Medien geeignet, die in einer Rohrleitung mit einem Kaliber von größer 100 mm, insb. von 250 mm oder darüber, geführt sind und zumindest zeitweise mit Massendurchflußraten von mehr als 400 t/h, insb. auch von mehr als 1500 t/h, strömen, wie es nicht zuletzt auch in Anwendungen zur Messung von Erdöl, Erdgas oder anderen petrochemischen Stoffen durchaus üblich ist.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:
- Fign. 1, 2: ein, beispielsweise als Coriolis-Durchfluss/Dichte/Viskositäts-Aufnehmer dienendes - hier als In-Line-Meßgerät in Kompaktbauweise ausgebildetes - Meßsystem in perspektivischen, teilweise auch geschnittenen, Seitenansichten;
- Fign. 3a, b: eine Projektion des Meßsystems gemäß Fig. 1 in zwei verschiedenen Seitenansichten;
- Fig. 4: in perspektivischer Seitenansicht einen Meßaufnehmer vom Vibrationstyp, als Komponente eines Meßsystems gemäß Fig. 1;
- Fign. 5a, b: eine Projektion des Meßaufnehmers gemäß Fig. 4 in zwei verschiedenen Seitenansichten;
- Fign. 6a, b: Projektionen eines Innenteils des Meßaufnehmers gemäß Fig. 4 in zwei verschiedenen Seitenansichten;
- Fign. 7a, b: schematisch Schwingungsmoden (V-Mode; X-Mode) einer Rohranordnung gemäß Fig. 4b, jeweils in Projektion auf eine gedachte Querschnittsebene nämlicher Rohranordnung;
- Fig. 8: in perspektivischer Seitenansicht eine Weiterbildung des Meßaufnehmers gemäß Fig. 4, als Komponente eines Meßsystems gemäß Fig. 1; und
- Fign. 9a, b: eine Projektion des Meßaufnehmers gemäß Fig. 8 in zwei verschiedenen Seitenansichten.

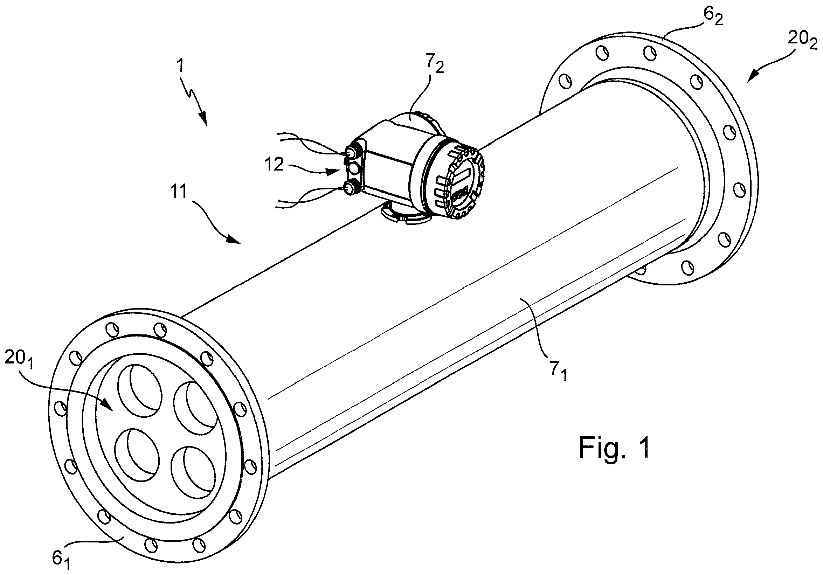

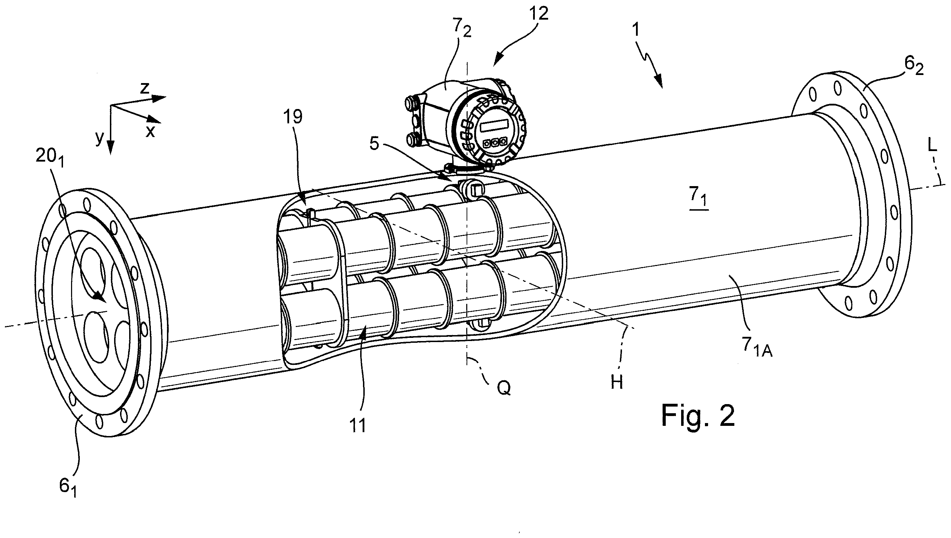

In den Fig. 1, 2 ist ein, insb. als Coriolis-Massedurchfluß- und/oder Dichte-Meßgerät ausgebildetes, Meßsystem 1 schematisch dargestellt, das im nicht zuletzt dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das Meßsystem 1 ggf. auch dazu verwendet werden eine Dichte ρ und/oder eine Viskosität η des Mediums zu messen. Im besonderen ist das Meßsystem 1 dafür vorgesehen, solche Medien, wie z.B. Erdöl, Erdgas oder andere petrochemische Stoffe, zu messen, die in einer Rohrleitung mit einem Kaliber von größer als 100 mm, insb. einem Kaliber von 300 mm oder darüber, strömen. Nicht zuletzt ist das In-Line-Meßgerät auch dafür vorgesehen strömende Medien der vorgenannten Art zu messen, die mit einer Massendurchflußrate von größer als 400 t/h, insb. von größer 1500 t/h, strömen gelassen sind.

Das - hier als In-Line-Meßgerät, nämlich in den Verlauf der Rohrleitung einsetzbares Meßgerät, in Kompaktbauweise gezeigte - Meßsystem 1 umfaßt dafür einen im Betrieb vom zu messenden Medium durchströmten Meßaufnehmer 11 vom Vibrationstyp sowie eine mit dem Meßaufnehmer 11 elektrisch verbundene - hier nicht im einzelnen dargestellte - Umformer-Elektronik 12 zum Ansteuern des Meßaufnehmers und zum Auswerten von vom Meßaufnehmer gelieferten Schwingungssignalen. In vorteilhafter Weise kann die, beispielsweise mittels einem oder mehreren Mikroprozessoren und/oder mittels eines oder mehreren digitalen Signalprozessoren gebildete Umformer-Elektronik 12 z.B. so ausgelegt sein, daß sie im Betrieb des Meßsystems 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem leitungsgebundenen Feldbussystem und/oder drahtlos per Funk, Meß- und/oder andere Betriebsdaten austauschen kann. Des weiteren kann die Umformer-Elektronik 12 so ausgelegt sein, daß sie von einer externen Energieversorgung, beispielsweise auch über das vorgenannte Feldbussystem, gespeist werden kann. Für den Fall, daß das Meßsystem 1 für eine Ankopplung an ein Feldbus- oder ein anderes Kommunikationssystem vorgesehen ist, kann die, beispielsweise auch vor Ort und/oder via Kommunikationssystem reprogrammierbare, Umformer-Elektronik 12 zu dem eine entsprechende Kommunikations-Schnittstelle für eine Datenkommunikation aufweisen, z.B. zum Senden der Meßdaten an die bereits erwähnte speicherprogrammierbare Steuerung oder ein übergeordnetes Prozeßleitsystem und/oder zum Empfangen von Einstelldaten für das Meßsystem.

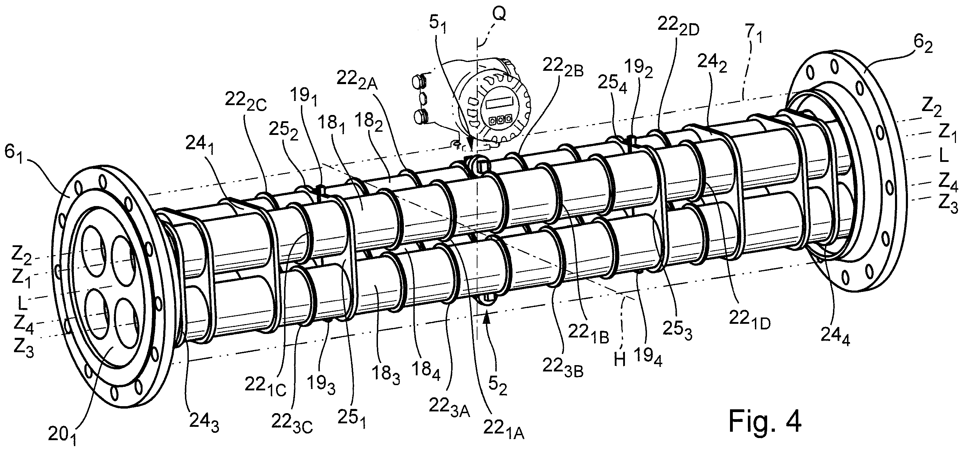

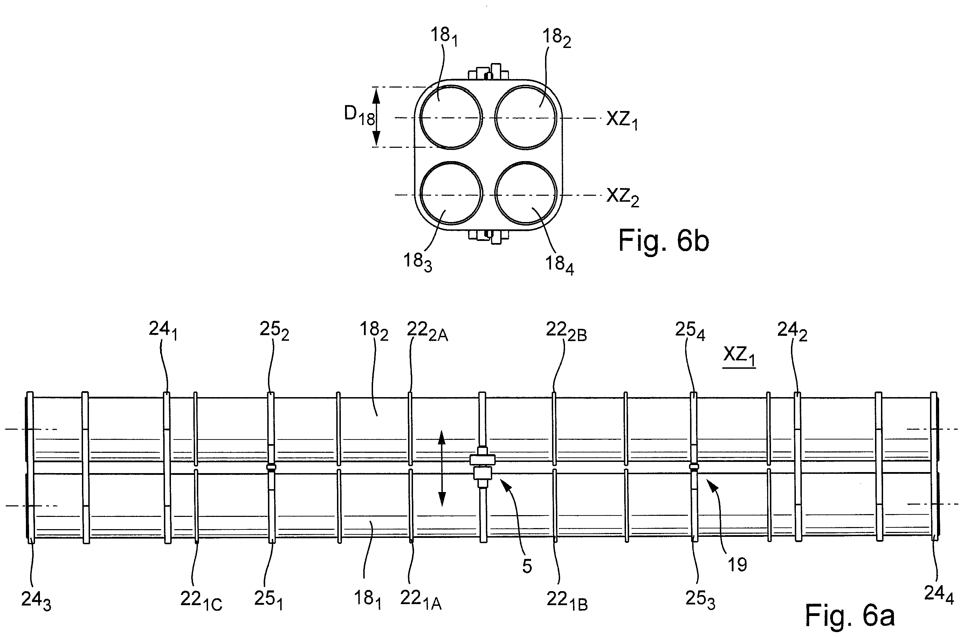

In den Fig. 4a, 4b, 5a, 5b, 6a, 6b ist in unterschiedlichen Darstellungen ein Ausführungsbeispiel für einen für das Meßsystem 1 geeigneten, insb. als Coriolis-Massedurchfluss-, als Dichte- und/oder als Viskositäts-Aufnehmer dienenden, Meßaufnehmer 11 vom Vibrationstyp gezeigt, welcher Meßaufnehmer 11 im Betrieb in den Verlauf einer vom jeweils zu messenden, etwa pulvrigen, flüssigen, gasförmigen oder dampfförmigen, Medium durchströmten - hier nicht dargestellten - Rohrleitung eingesetzt ist. Der Meßaufnehmer 11 dient, wie bereits erwähnt, dazu, in einem hindurchströmenden Medium solche mechanische Reaktionskräfte, insb. von der Massenduchflußrate abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Umformer-Elektronik entsprechend implementierten Auswerte-Verfahren in der dem Fachmann bekannten Weise z.B. die m Massendurchflußrate, mithin der Massendurchfluß, und/oder die Dichte und/oder die Viskosität des Mediums gemessen werden.

Der Meßaufnehmer 11 weist ein u.a. auch als Traggestell dienendes - hier im wesentlichen rohrförmiges, außen kreiszylindrisches - Aufnehmer-Gehäuse 7₁, in dem weitere, dem Erfassen der wenigstens einen Meßgröße dienende Komponenten des Meßaufnehmers 11 vor äußeren Umwelteinflüssen geschützt untergebracht sind. Im hier gezeigten Ausführungsbeispiel ist zumindest ein Mittelsegment des Aufnehmer-Gehäuses 7₁ mittels eines geraden, insb. kreiszylindrischen, Rohres gebildet, so daß zur Fertigung des Aufnehmer-Gehäuses beispielsweise auch kostengünstige, geschweißte oder gegossenen Standardrohre, beispielsweise aus Stahlguß oder geschmiedetem Stahl, verwendet werden können.

Ein einlaßseitiges erstes Gehäuseende des Aufnehmer-Gehäuses 7₁ ist mittels eines einlaßseitigen ersten Strömungsteilers 20₁ und ein auslaßseitiges zweites Gehäuseende des Aufnehmer-Gehäuses 7₁ ist mittels auslaßseitigen zweiten Strömungsteilers 20₂ gebildet. Jeder der beiden, insoweit als integraler Bestandteil des Gehäuses ausgebildeten, Strömungsteiler 20₁, 20₂ weist genau vier jeweils voneinander beabstandeten, beispielsweise kreiszylindrische oder kegelförmige bzw. jeweils als Innenkonus ausgebildete, Strömungsöffnungen 20_{1A}, 20_{1B}, 20_{1C}, 20_{1D} bzw. 20_{2A}, 20_{2B}, 20_{2C}, 20_{2D} auf.

Darüberhinaus ist jeder der, beispielsweise aus Stahl gefertigten, Strömungsteiler 20₁, 20₂ jeweils mit einem, beispielsweise aus Stahl gefertigten, Flansch 6₁ bzw. 6₂ zum Anschließen des Meßaufnehmers 11 an ein dem Zuführen von Medium zum Meßaufnehmer dienendes Rohrsegment der Rohrleitung bzw. an ein dem Abführen von Medium vom Meßaufnehmer dienendes Rohrsegment der erwähnten Rohrleitung versehen. Jeder der beiden Flansche 6₁, 6₂ weist gemäß einer Ausgestaltung der Erfindung eine Masse von mehr als 50 kg, insb. von mehr als 60 kg und/oder weniger als 100 kg, auf. Zum leckagefreien, insb. fluiddichten, Verbinden des Meßaufnehmers mit dem jeweils korrespondierenden Rohrsegment der Rohrleitung weist jeder der Flansche ferner jeweils eine entsprechende, möglichst plane Dichtfläche 6_{1A} bzw. 6_{2A} auf. Ein Abstand zwischen den beiden Dichtflächen 6_{1A}, 6_{2A} beider Flansche definiert somit praktisch eine Einbaulänge, L₁₁, des Meßaufnehmers 11. Die Flansche sind, insb. hinsichtlich ihres Innendurchmessers, ihrer jeweiligen Dichtfläche sowie den der Aufnahme entsprechender Verbindungsbolzen dienenden Flanschbohrungen, entsprechend der für den Meßaufnehmer 11 vorgesehenen nominelle Nennweite D₁₁ sowie den dafür ggf. einschlägigen Industrienormen dimensioniert, die einem Kaliber der Rohrleitung, in deren Verlauf der Meßaufnehmer einzusetzen ist, entspricht.

Infolge der für den Meßaufnehmer letztlich angestrebten großen Nennweite beträgt dessen Einbaulänge L₁₁ gemäß einer Ausgestaltung der Erfindung mehr als 1200mm. Ferner ist aber vorgesehen, die Einbaulänge des Meßaufnehmers 11 möglichst klein, insb. kleiner als 3000mm zu halten. Die Flansche 6₁, 6₂ können, wie auch aus Fig. 4 ohne weiteres ersichtlich und wie bei derartigen Meßaufnehmer durchaus üblich, dafür möglichst nah an den Strömungsöffnungen der Strömungsteiler 20₁, 20₂ angeordnet sein, um so einen möglichst kurzen Vor- bzw. Auslaufbereich in den Strömungsteilern zu schaffen und somit insgesamt eine möglichst kurze Einbaulänge L₁₁ des Meßaufnehmers, insb. von weniger als 3000 mm, zu schaffen. Für einen möglichst kompakten Meßaufnehmer mit einem auch bei angestrebt hohen Massendurchflußraten von über 2200 t/h sind nach einer anderen Ausgestaltung der Erfindung die Einbaulänge und die nominelle Nennweite des Meßaufnehmers aufeinander abgestimmt so bemessen, daß ein Nennweite-zu Einbaulänge-Verhältnis D₁₁/ L₁₁ des Meßaufnehmers, definiert durch ein Verhältnis der nominellen Nennweite D₁₁ des Meßaufnehmers zur Einbaulänge L₁₁ des Meßaufnehmers kleiner als 0.3, insb. kleiner als 0.2 und/oder größer als 0.1, ist.

In einer weiteren Ausgestaltung des Meßaufnehmers umfaßt das Aufnehmer-Gehäuse ein im wesentlichen rohrförmiges Mittelsegment. Ferner ist vorgesehen, das Aufnehmer-Gehäuse so zu dimensionieren, daß ein durch durch ein Verhältnis des größten Gehäuse-Innendurchmessers zur nominellen Nennweite des Meßaufnehmers definiertes Gehäuse-Innendurchmesser-zu-Nennweite-Verhältnis des Meßaufnehmers, zwar größer als 0.9, jedoch kleiner als 1.5, möglichst aber kleiner als 1.2 ist.

Bei dem hier gezeigten Ausführungsbeispiel schließen sich ein- bzw. auslaßseitig an das Mittelsegment ferner ebenfalls rohrförmige Endsegmente des Aufnehmergehäuses an. Für den im Ausführungsbeispiel gezeigten Fall, daß das Mittelsegment und die beiden Endsegmente wie auch die mit dem jeweiligen Flansch verbundenen Strömungsteiler im Vor- bzw. Auslaufbereich jeweils den gleichen Innendurchmesser aufweisen, kann das Aufnehmer-Gehäuse in vorteilhafter Weise auch mittels eines einstückigen, beispielsweise gegossenen oder geschmiedeten, Rohres gebildet werden, an dessen Enden die Flansche angeformt oder angeschweißt sind, und bei dem die Strömungsteiler mittels, insb. von den Flanschen etwas beabstandet, an die Innenwand orbital und/oder mittels Laser angeschweißten, die Strömungsöffnungen aufweisenden Platten gebildet sind. Insbesondere für den Fall, daß das erwähnte Gehäuse-Innenendurchmesser-zu-Nennweite-Verhältnis des Meßaufnehmers gleich eins gewählt ist, kann für Fertigung des Aufnehmer-Gehäuses beispielsweise ein der anzuschließenden Rohrleitung hinsichtlich Kaliber, Wandstärke und Material entsprechendes und insoweit auch hinsichtlich des erlaubten Betriebsdrucks entsprechend angepaßtes Rohr mit zur gewählten Meßrohrlänge entsprechend passender Länge verwendet werden.

Zum Führen des zumindest zeitweise durch Rohrleitung und Meßaufnehmer strömenden Mediums umfaßt der erfindungsgemäße Meßaufnehmer ferner eine Rohranordnung mit genau vier im Aufnehmer-Gehäuse 10 schwingfähig gehalterten geraden Meßrohren 18₁, 18₂, 18₃, 18₄. Die vierhier gleichlangen sowie parallelen - Meßrohre kommunizieren jeweils mit der an den Meßaufnehmer angeschlossenen Rohrleitung und werden im Betrieb zumindest zeitweise, insb. auch simultan, in wenigstens einem für Ermittlung der physikalischen Meßgröße geeigneten, aktiv angeregten Schwingungsmode - dem sogenannten Nutzmode - vibrieren gelassen. Von den vier Meßrohren münden ein erstes Meßrohr 18₁ mit einem einlaßseitigen ersten Meßrohrende in eine erste Strömungsöffnung 20_{1A} des ersten Strömungsteilers 20₁ und mit einem auslaßseitigen zweiten Meßrohrende in eine erste Strömungsöffnung 20_{2A} des zweiten Strömungsteilers 20₂, ein zweites Meßrohr 18₂ mit einem einlaßseitigen ersten Meßrohrende in eine zweite Strömungsöffnung 20_{1B} des ersten Strömungsteilers 20₁ und mit einem auslaßseitigen zweiten Meßrohrende in eine zweite Strömungsöffnung 20_{2B} des zweiten Strömungsteilers 20₂, ein drittes Meßrohr 18₃ mit einem einlaßseitigen ersten Meßrohrende in eine dritte Strömungsöffnung 20_{1C} des ersten Strömungsteilers 20₁ und mit einem auslaßseitigen zweiten Meßrohrende in eine dritte Strömungsöffnung 20_{2C} des zweiten Strömungsteilers 20₂ und ein viertes Meßrohr 18₄ mit einem einlaßseitigen ersten Meßrohrende in eine vierte Strömungsöffnung 20_{1D} des ersten Strömungsteilers 20₁ und mit einem auslaßseitigen zweiten Meßrohrende in eine vierte Strömungsöffnung 20_{2D} des zweiten Strömungsteilers 20₂. Die vier Meßrohre 18₁, 18₂, 18₃, 18₄ sind somit unter Bildung strömungstechnisch parallel geschalteter Strömungspfade an die, insb. baugleichen, Strömungsteiler 20₁, 20₂ angeschlossen, und zwar in einer Vibrationen, insb. Biegeschwingungen, der Meßrohre relativ zueinander wie auch relativ zum Aufnehmergehäuse ermöglichenden Weise. Ferner ist vorgesehen, daß die vier Meßrohre 18₁, 18₂, 18₃, 18₄ lediglich mittels nämlicher Strömungsteiler 20₁, 20₂ im Aufnehmer-Gehäuse 7₁ - hier nämlich an dessen Mittelsegment 7_{1A} - schwingfähig gehaltert sind. Als Material für die Rohrwände der Meßrohre eignet sich beispielsweise rostfreier, ggf. auch hochfester, Edelstahl, Titan, Zirkonium oder Tantal bzw. damit gebildete Legierungen oder auch Superlegierungen, wie etwa Hastelloy, Inconel etc.. Darüber hinaus kann als Material für die vier Meßrohre 18₁, 18₂, 18₃, 18₄ aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze. Alternativ oder in Ergänzung sind nach einer weiteren Ausgestaltung der Erfindung zumindest das erste und das zweite Meßrohr 18₁, 18₂ hinsichtlich des Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich ausgeführt. Ferner sind auch zumindest das dritte und das vierte Meßrohr 18₃, 18₄ hinsichtlich des Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers und/oder eines Kalibers, baugleich, so daß im Ergebnis die vier Meßrohre 18₁, 18₂, 18₃, 18₄ zumindest paarweise im wesentlichen baugleich ausgebildet sind. Vorzugsweise sind die vier Meßrohre 18₁, 18₂, 18₃, 18₄ hinsichtlich eines Materials, aus dem deren Rohrwände bestehen, und/oder hinsichtlich ihrer geometrischen Rohr-Abmessungen, insb. einer Meßrohrlänge, einer Rohrwandstärke, eines Rohr-Außendurchmessers, einer Form der jeweiligen Biegelinie und/oder eines Kalibers, baugleich realisiert, insb. derart, daß im Ergebnis zumindest eine minimale Biegeschwingungs-Resonanzfrequenz jedes der vier - leeren oder gleichmäßig von einem homogenen Medium durchströmten - Meßrohre 18₁, 18₂, 18₃, 18₄ im wesentlichen gleich den jeweiligen minimalen Biegeschwingungs-Resonanzfrequenzen der verbleibenden anderen Meßrohre ist.

Beim erfindungsgemäßen Meßaufnehmer sind die Meßrohre - wie auch aus der Zusammenschau der Fig. 2, 4a und 4b ohne weiteres ersichtlich - ferner so ausgebildet und im Meßaufnehmer angeordnet, daß die Rohranordnung eine sowohl zwischen dem ersten Meßrohr 18₁ und dem dritten Meßrohr 18₃ als auch zwischen dem zweiten Meßrohr 18₂ und dem vierten Meßrohr 18₄ liegende erste gedachte Längsschnittebene XZ aufweist, bezüglich der die Rohranordnung spiegelsymmetrisch ist, und daß die Rohranordnung weiters eine zu deren gedachter erster Längsschnittebene XZ senkrechte, sowohl zwischen dem ersten Meßrohr 18₁ und zweiten Meßrohr 18₂ als auch zwischen dem dritten Meßrohr 18₃ und vierten Meßrohr 18₄ verlaufende zweite gedachte Längsschnittebene YZ aufweist, bezüglich der die Rohranordnung gleichfalls spiegelsymmetrisch ist. Im übrigen weist die die Rohranordnung, wie auch aus der Zusammenschau der Fig. 4a-6b ohne weiteres ersichtlich, eine sowohl zur ersten gedachten Längsschnittebene XZ als auch zur zweiten gedachten Längsschnittebene YZ jeweils senkrechte gedachte Querschnittebene XY auf. Gemäß einer vorteilhaften Ausgestaltung der Erfindung ist die Rohranordnung ferner so ausgebildet, daß ein Massenschwerpunkt der Rohranordnung in der gedachten Querschnittsebene XY liegt bzw. daß die Rohranordnung bezüglich der gedachten Querschnittsebene XY spiegelsymmetrisch ist.

Zur weiteren Symmetrisierung des Meßaufnehmers und insoweit auch zur weiteren Vereinfachung von dessen Aufbau sind die beiden Strömungsteiler 20₁, 20₂ gemäß einer weiteren Ausgestaltung der Erfindung ferner so ausgebildet und so im Meßaufnehmer angeordnet, daß, wie auch in den Fig. 4a und 4b schematisch dargestellt, eine die erste Strömungsöffnung 20_{1A} des ersten Strömungsteilers 20₁ mit der ersten Strömungsöffnung 20_{2A} des zweiten Strömungsteilers 20₂ imaginär verbindende gedachte erste Verbindungsachse Z₁ des Meßaufnehmers parallel zu einer die zweite Strömungsöffnung 20_{1B} des ersten Strömungsteilers 20₁ mit der zweiten Strömungsöffnung 20_{2B} des zweiten Strömungsteilers 20₂ imaginär verbindende gedachten zweiten Verbindungsachse Z₂ des Meßaufnehmers verläuft, und daß eine die dritte Strömungsöffnung 20_{1C} des ersten Strömungsteilers 20₁ mit der dritten Strömungsöffnung 20_{2C} des zweiten Strömungsteilers 20₂ imaginär verbindende gedachte dritten Verbindungsachse Z₃ des Meßaufnehmers parallel zu einer die vierte Strömungsöffnung 20_{1D} des ersten Strömungsteilers 20₁ mit der vierten Strömungsöffnung 20_{2B} des zweiten Strömungsteilers 20₂ imaginär verbindende gedachten vierten Verbindungsachse Z₄ des Meßaufnehmers verläuft. Wie in der Fig. 4a und 4b gezeigte, sind die Strömungsteiler ferner so ausgebildet und im Meßaufnehmer so angeordnet, daß die Verbindungsachsen Z₁, Z₂, Z₃, Z₄ auch zu einer mit der Rohrleitung im wesentlichen fluchtenden und/oder mit vorgenannter Schnittlinie der beiden gedachten Längsschnittebenen XZ, YZ der Rohranordnung koinzidente Hauptströmungsachse L des Meßaufnehmers parallel sind. Desweiteren können die beiden Strömungsteiler 20₁, 20₂ zudem auch so ausgebildet und so im Meßaufnehmer angeordnet sein, daß eine erste gedachte Längsschnittebene XZ₁ des Meßaufnehmers, innerhalb der die erste gedachte Verbindungsachse Z₁ und die zweite gedachte Verbindungsachse Z₂ verlaufen, parallel zu einer zweiten gedachten Längsschnittebene XZ₂ des Meßaufnehmers ist, innerhalb der die gedachte dritte Verbindungsachse Z₃ und die gedachte vierte Verbindungsachse Z₄ verlaufen.

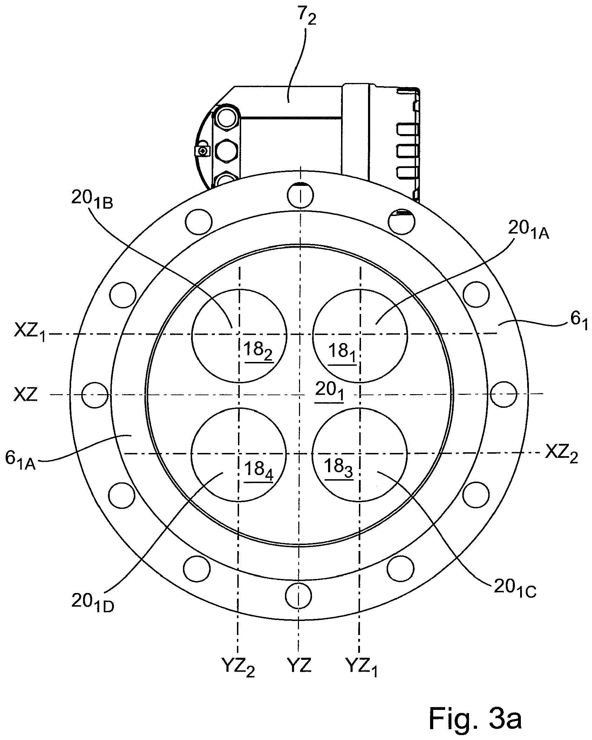

Darüberhinaus sind die Meßrohre gemäß einer weiteren Ausgestaltung der Erfindung ferner so ausgebildet und so im Meßaufnehmer angeordnet, daß die gedachte erste Längsschnittebene XZ der Rohranordnung, wie u.a. auch aus der Zusammenschau der Fig. 3a und 4a ersichtlich, zwischen der vorgenannten ersten gedachten Längsschnittebene XZ₁ des Meßaufnehmers und der vorgenannten zweiten gedachten Längsschnittebene XZ₂ des Meßaufnehmers liegt, beispielsweise auch so, daß die erste Längsschnittebene XZ der Rohranordnung parallel zur ersten und zweiten Längsschnittebene XZ₁, XZ₂ des Meßaufnehmers ist. Ferner sind die Meßrohre so ausgebildet und im Meßaufnehmer angeordnet, daß gleichermaßen auch die zweite gedachte Längsschnittebene YZ der Rohranordnung zwischen der dritten gedachten Längsschnittebene YZ₁ des Meßaufnehmers und der vierten gedachten Längsschnittebene YZ₂ des Meßaufnehmers verläuft, etwa derart, daß die zweite gedachte Längsschnittebene YZ der Rohranordnung parallel zur dritten gedachten Längsschnittebene YZ₁des Meßaufnehmers und parallel zur vierten gedachten Längsschnittebene YZ₂ des Meßaufnehmers ist. Im hier gezeigten Ausführungsbeispiel ist die Rohranordnung, wie aus der Zusammenschau der Fig. 4a, 4b, 5a, 5b und 6a ohne weiteres ersichtlich, ferner so ausgebildet und so im Aufnehmergehäuse plaziert, daß im Ergebnis nicht nur die gemeinsame Schnittlinie der ersten und zweiten gedachten Längsschnittebenen XZ, YZ der Rohranordnung parallel bzw. koinzident zur Längsachse L ist, sondern auch eine gemeinsame Schnittlinie der ersten Längsschnittebene XZ und der Querschnittsebene XY parallel zu einer zur Längsachse L senkrechten gedachten Querachse Q des Meßaufnehmers und eine gemeinsame Schnittlinie der zweiten Längsschnittebene YZ und der Querschnittsebene XY parallel zu einer zur Längsachse L senkrechten gedachten Hochachse H des Meßaufnehmers sind.

Gemäß einer weiteren vorteilhaften Ausgestaltung der Erfindung sind die Strömungsöffnungen des ersten Strömungsteilers 20₁ ferner so angeordnet, daß jene gedachten Flächenschwerpunkte, die zu den - hier kreisförmigen - Querschnittsflächen der Strömungsöffnungen des ersten Strömungsteilers gehören, die Eckpunkte eines gedachten Rechteck oder eines gedachten Quadrats, bilden, wobei nämliche Querschnittsflächen wiederum in einer gemeinsamen gedachten, senkrecht zu einer - beispielsweise innerhalb der ersten Längsschnittebene XZ der Rohranordnung verlaufenden bzw. zur erwähnten Hauptströmungsachse des Meßaufnehmers parallelen oder auch koinzidenten - Längsachse L des Meßaufnehmers verlaufenden bzw. auch zu den Längsschnittebenen des Meßaufnehmers senkrechten Querschnittebene des ersten Strömungsteilers liegen. Ferner sind auch die Strömungsöffnungen des zweiten Strömungsteilers 20₂ so angeordnet, daß zu - hier ebenfalls kreisförmigen - Querschnittsflächen der Strömungsöffnungen des zweiten Strömungsteilers 20₂ zugehörige gedachte Flächenschwerpunkte die Eckpunkte eines gedachten Rechtecks bzw. Quadrats bilden, wobei nämliche Querschnittsflächen wiederum in einer gemeinsamen gedachten, senkrecht zur erwähnten Hauptströmungs- oder auch Längsachse L des Meßaufnehmers verlaufenden bzw. zu den Längsschnittebenen des Meßaufnehmers senkrechten Querschnittebene des zweiten Strömungsteilers liegen.

Als Material für das Aufnehmer-Gehäuse 7₁ können im übrigen Stähle, wie etwa Baustahl bzw. rostfreier Stahl, oder auch andere geeignete bzw. üblicherweise hierfür geeignete hochfeste Werkstoffe verwendet werden. Für die meisten Anwendungen der industriellen Meßtechnik, insb. auch in der petrochemischen Industrie, können zudem auch Meßrohre aus rostfreiem Stahl, beispielsweise auch Duplexstahl, Superduplexstahl oder einem anderen (hochfesten) Edelstahl, den Anforderungen hinsichtlich der mechanischen Festigkeit, der chemischen Beständigkeit sowie den thermischen Anforderungen genügen, so daß in zahlreichen Anwendungsfällen das Aufnehmer-Gehäuse 7₁, die Strömungsteiler 20₁, 20₂ wie auch die Rohrwände der Meßrohre 18₁, 18₂, 18₃, 18₄ jeweils aus Stahl von jeweils ausreichend hoher Güte bestehen können, was insb. im Hinblick auf die Material- und Fertigungskosten wie auch das thermisch bedingte Dilatationsverhalten des Meßaufnehmers 11 im Betrieb von Vorteil sein kann. Überdies kann das Aufnehmer-Gehäuse 7₁ ferner in vorteilhafter Weise auch so ausgeführt und so bemessen sein, daß es bei allfälligen Schäden an einem oder mehreren der Meßrohre, z.B. durch Rißbildung oder Bersten, ausströmendes Medium bis zu einem geforderten maximalen Überdruck im Inneren des Aufnehmer-Gehäuses 7₁ möglichst lange vollständig zurückzuhalten kann, wobei solche kritischen Zustand mittels entsprechenden Drucksensoren und/oder anhand von der erwähnten Umformer-Elektronik 12 im Betrieb intern erzeugten Betriebsparametern möglichst frühzeitig erfaßt und signalisiert werden können. Zur Vereinfachung des Transports des Meßaufnehmers bzw. des gesamten damit gebildeten In-line-Meßgeräts können ferner einlaßseitig und auslaßseitig außen am Aufnehmer-Gehäuse fixierte eine Transport-Öse vorgesehen sein.

Wie bereits eingangs erwähnt, werden beim Meßaufnehmer 11 die für die Messung erforderlichen Reaktionskräfte im jeweils zu messenden Medium durch das, beispielsweise simultane, Schwingenlassen der Meßrohre 18₁, 18₂, 18₃, 18₄ in einem aktiv angeregten Schwingungsmode, dem sogenannten Nutzmode, bewirkt. Zum Anregen von Schwingungen der Meßrohre, nicht zuletzt auch denen im Nutzmode, umfaßt der Meßaufnehmer ferner eine mittels wenigstens eines auf die Meßrohre 18₁, 18₂, 18₃, 18₄ einwirkenden elektro-mechanischen, beispielsweise elektrodynamischen, Schwingungserregers gebildete Erregeranordnung 5, die dazu dient jedes der Meßrohre betriebsgemäß zumindest zeitweise in für die konkrete Messung jeweils geeignete Schwingungen, insb. von Biegeschwingungen, im Nutzmode mit jeweils für die Erzeugung und die Erfassung der oben genannten Reaktionskräfte im Medium ausreichend großen Schwingungsamplitude zu versetzen bzw. diese Nutzschwingungen aufrechtzuerhalten. Der wenigstens eine Schwingungserreger, mithin die damit gebildete Erregeranordnung dient hierbei im besonderen dazu, eine von der Umformer-Elektronik - etwa mittels wenigstens eines elektrischen Treibersignals - eingespeiste elektrische Erregerleistung P_{exc} in solche, z.B. pulsierenden oder harmonischen, Erregerkräfte F_{exc} zu konvertieren, die möglichst gleichzeitig, gleichmäßig jedoch gegensinnig auf wenigstens zwei die Meßrohre, etwa das erste und zweite Meßrohr, einwirken, ggf. auch von den beiden Meßrohre weiter auf die anderen zwei Meßrohre mechanisch gekoppelt werden, und so Schwingungen im Nutzmode bewirken. Die - durch Konvertierung von in die Erregeranordnung eingespeister elektrischer Erregerleistung P_{exc} generierten - Erregerkräfte F_{exc} können in dem Fachmann an und für sich bekannter Weise, z.B. mittels einer in der Umformer-Elektronik 12 vorgesehenen, letztlich das Treibersignal liefernden Betriebsschaltung eingestellt werden, etwa mittels in der Betriebsschaltung implementierten Strom- und/ oder Spannungs-Reglern hinsichtlich ihrer Amplitude und, z.B. mittels einer in Betriebsschaltung gleichfalls vorgesehenen Phasen-Regelschleife (PLL), hinsichtlich ihrer Frequenz, vgl. hierzu beispielsweise auch die US-A 48 01 897 oder die US-B 63 11 136. Gemäß einer weiteren Ausgestaltung der Erfindung ist daher ferner vorgesehen, daß die Umformer-Elektronik für die Generierung der Erregerkräfte benötigte elektrische Erregerleistung in die Erregeranordnung mittels wenigstens eines, dem Schwingungserreger, mithin der Erregeranordnung beispielsweise via Verbindungsleitungen zugeführten und/oder zumindest zeitweise periodischen, elektrischen Treibersignals einspeist, das mit wenigstens einer mit einer einer Eigenfrequenz eines natürlichen Schwingungsmodes der Rohranordnung entsprechenden Signalfrequenz veränderlich ist. Beispielsweise kann das wenigstens eine Treibersignal auch eine Vielzahl von Signalkomponenten mit voneinander verschiedener Signalfrequenz aufweisen, von denen wenigstens eine - etwa eine hinsichtlich einer Signalleistung dominierende - Signalkomponente eine einer Eigenfrequenz eines natürlichen Schwingungsmodes der Rohranordnung in dem jedes der vier Meßrohre Biegeschwingungen ausführt, beispielsweise also dem erwähnten Biegeschwingungsmode erster Art, entsprechende Signalfrequenz aufweist. Darüberhinaus kann es ferner von Vorteil sein - etwa zwecks Anpassens der eingespeisten Erregerleistung an die momentan für eine ausreichende Schwingungsamplitude tatsächlich benötige -, das wenigstens eine Treibersignal hinsichtlich einer maximalen Spannungshöhe (Spannungsamplitude) und/oder einer maximalen Stromstärke (Stromamplitude) veränderlich auszuführen - etwa derart, daß beispielsweise Zylinderspule des wenigstens einen Schwingungserregers von einem von einer mittels nämlichen Treibersignals bereitgestellten veränderlichen Erregerspannung getriebenen Erregerstrom durchflossen ist.

Ziel der aktiven Anregung der Meßrohre zu Schwingungen ist es im Besonderen, nicht zuletzt auch für den Fall, daß das mittels des Meßaufnehmers schlußendlich gebildete Meßsystem zur Messung des Massendurchflusses verwendet werden soll, mittels der im Nutzmode vibrierenden Meßrohre im hindurchströmendem Medium ausreichend starke Corioliskräfte zu induzieren, so daß im Ergebnis eine zusätzliche, mithin einem Schwingungsmode höherer Ordnung der Rohranordnung - dem sogenannten Coriolismode - entsprechende Verformungen jedes der Meßrohre mit für die Messung ausreichenden Schwingungsamplituden bewirkt werden kann. Beispielsweise können die Meßrohre 18₁, 18₂, 18₃, 18₄ mittels der daran gehalterten elektro-mechanischen Erregeranordnung zu, insb. simultanen, Biegeschwingungen, insb. auf einer momentanen mechanischen Eigenfrequenz der mittels der vier Meßrohre 18₁, 18₂, 18₃, 18₄ gebildeten Rohranordnung, angeregt werden, bei denen sie - zumindest überwiegend - lateral ausgelenkt und, wie aus der Zusammenschau der Fign. 3a, 3b, 6a, 6b, 7a, 7b für den Fachmann ohne weiteres ersichtlich, paarweise zueinander im wesentlichen gegengleich schwingen gelassen werden. Dies im besonderen derart, daß von jedem der Meßrohre 18₁, 18₂, 18₃, 18₄ im Betrieb zeitgleich ausgeführten Vibrationen zumindest zeitweise und/oder zumindest anteilig jeweils als Biegeschwingungen um eine statische Ruhelage ausgebildet sind. Anders gesagt, können die Meßrohre, wie bei Meßaufnehmern vom Vibrationstyp mit geraden Meßrohren durchaus üblich, jeweils zumindest abschnittsweise nach Art einer eingespannten Saite schwingen gelassen werden, mithin also Biegeschwingungen in einer jeweiligen Biegeschwingungsebene ausführen. Gemäß einer Ausgestaltung der Erfindung ist die Erregeranordnung ferner derart ausgebildet ist, daß damit das erste Meßrohr 18₁ und das zweite Meßrohr 18₂ zu bezüglich der zweiten gedachten Längsschnittebene YZ gegengleichen, insb. auch zu bezüglich der zweiten gedachten Längsschnittebene YZ symmetrischen, Biegeschwingungen und das dritte Meßrohr 18₃ und das vierte Meßrohr 18₄ zu bezüglich der zweiten gedachten Längsschnittebene YZ gegengleichen, insb. auch zu bezüglich der zweiten gedachten Längsschnittebene YZ symmetrischen, Biegeschwingungen anregbar sind. Darüberhinaus ist die Erregeranordnung ferner derart ausgebildet, daß damit das erste Meßrohr 18₁ und das dritte Meßrohr 18₃ zu bezüglich der zweiten gedachten Längsschnittebene YZ gegengleichen, beispielsweise auch zu bezüglich der zweiten gedachten Längsschnittebene YZ symmetrischen, Biegeschwingungen und das zweite Meßrohr 18₂ und das vierte Meßrohr 18₄ zu bezüglich der zweiten gedachten Längsschnittebene YZ gegengleichen, beispielsweise zu bezüglich der zweiten gedachten Längsschnittebene YZ symmetrischen, Biegeschwingungen anregbar sind. Die Erregeranordnung, mithin die damit angeregten Biegeschwingungen der Meßrohre können hierbei so ausgebildet sein, daß das erste Meßrohr 18₁ und das zweite Meßrohr 18₂ im Nutzmode gegengleiche Biegeschwingungen in einer gemeinsamen gedachten ersten Schwingungsebene XZ₁, insoweit also komplannare Biegeschwingungen, und das dritte Meßrohr 18₃ und das vierte Meßrohr 18₄ im Nutzmode gleichermaßen gegengleichen Biegeschwingungen in einer gemeinsamen gedachten - hier zur ersten Schwingungsebene XZ₁ zudem im wesentlichen parallelen - zweiten Schwingungsebene XZ₂, mithin komplannare Biegeschwingungen ausführen.

Gemäß einer weiteren Ausgestaltung der Erfindung sind die Meßrohre 18₁, 18₂, 18₃, 18₄ im Betrieb mittels der Erregeranordnung 5 im Nutzmode ferner zumindest anteilig, insb. überwiegend, zu Biegeschwingungen angeregt, die eine Biegeschwingungsfrequenz aufweisen, die in etwa gleich einer momentanen mechanischen Resonanzfrequenz der die vier Meßrohre 18₁, 18₂, 18₄, 18₄ umfassenden Rohranordnung, mithin einer momentanen Eigenfrequenz eines Biegeschwingungsmode der Rohranordnung entspricht, ist oder die zumindest in der Nähe einer solchen Eigen- oder Resonanzfrequenz liegt. Die momentanen mechanischen Resonanzfrequenzen von Biegeschwingungen sind dabei bekanntlich in besonderem Maße von Größe, Form und Material der Meßrohre 18₁, 18₂, 18₃, 18₄ wie auch von einer momentanen Dichte des durch die Meßrohre hindurchströmenden Mediums abhängig und kann insoweit im Betrieb des Meßaufnehmers innerhalb eines durchaus einige Kilohertz breiten Nutz-Frequenzbandes veränderlich sein. Bei Anregung der Meßrohre auf einer momentanen Resonanzfrequenz kann somit einerseits anhand der momentan angeregten Schwingungsfrequenz eine mittlere Dichte des durch die vier Meßrohre momentane strömenden Mediums leicht ermittelt werden. Anderseits kann so auch die für die Aufrechterhaltung der im Nutzmode angeregten Schwingungen momentan erforderliche elektrische Leistung minimiert werden. Im besonderen werden die vier Meßrohre 18₁, 18₂, 18₃, 18₄, angetrieben von der Erregeranordnung, ferner zumindest zeitweise mit im wesentlichen gleicher Schwingungsfrequenz, insb. auf jeweils ein und derselben, insoweit einer gemeinsamen, natürlichen mechanischen Eigenfrequenz, schwingen gelassen. In vorteilhafter Weise sind das Schwingungsverhalten der mittels der vier Meßrohre 18₁, 18₂, 18₃, 18₄ gebildeten Rohranordnung wie auch die die Erregeranordnung steuernden Treibersignale ferner so aufeinander abgestimmt, daß zumindest die im Nutzmode angeregten Schwingungen der vier Meßrohre 18₁, 18₂, 18₃, 18₄ so ausgebildet sind, daß das erste und das zweite Meßrohr 18₁, 18₂ - etwa nach Art zweier endseitig eingespannter Saiten- zueinander im wesentlichen gegengleich, mithin zumindest in der gedachten Querschnittsebene XY mit einer gegenseitigen Phasenverschiebung von etwa 180°, schwingen und auch das dritte und das vierte Meßrohr 18₃, 18₄ gleichermaßen zueinander im wesentlichen gegengleich schwingen.

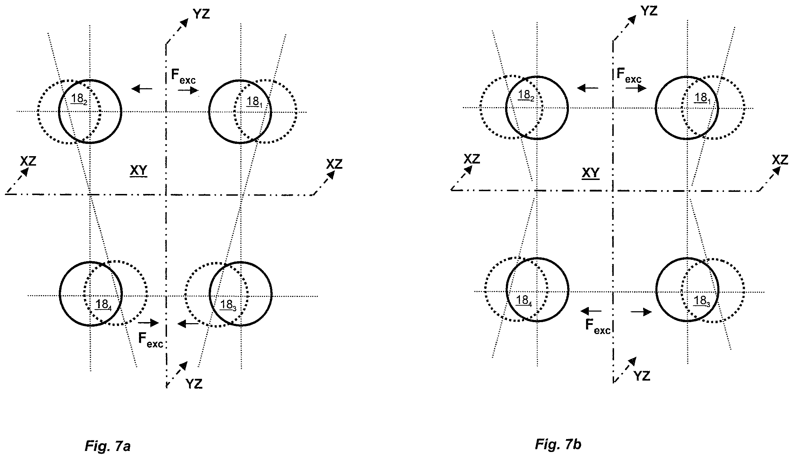

Untersuchungen an Meßsystemen mit einem Meßaufnehmer gemäß der in Rede stehenden Art haben ferner überraschender Weise ergeben, daß sich als Nutzmode, nicht zuletzt auch für die Ermittlung der Massendurchflußrate sowie der Dichte des im Meßaufnehmer geführten Mediums, im besonderen jener der Rohranordnung innewohnende natürliche - im weiteren als Biegeschwingungsgrundmode erster Art oder auch als V-Mode bezeichnete - Schwingungsmode eignet, in dem - wie auch in Fig. 7a schematisch dargestellt - das erste Meßrohr und das zweite Meßrohr bezüglich der zweiten gedachten Längsschnittebene YZ gegengleiche Biegeschwingungen um jeweils eine dem jeweiligen Meßrohr zugehörige statische Ruhelage ausführen, und in dem das dritte Meßrohr und das vierte Meßrohr bezüglich der zweiten gedachten Längsschnittebene ebenfalls gegengleiche Biegeschwingungen um jeweils eine dem jeweiligen Meßrohr zugehörige statische Ruhelage ausführen, und zwar so, daß - bezüglich der zweiten gedachten Längsschnittebene YZ - nämliche Biegeschwingungen des ersten Meßrohrs auch gegengleich zu nämlichen Biegeschwingungen des dritten Meßrohrs sind, und daß - bezüglich der zweiten gedachten Längsschnittebene YZ - nämliche Biegeschwingungen des zweiten Meßrohrs auch gegengleich zu nämlichen Biegeschwingungen des vierten Meßrohrs sind. Die die Rohranordnung in Projektion auf die Querschnittsebene XY zeitweise V-förmig erscheinen lassenden (vgl. Fig. 7a) - gegengleichen Biegeschwingungen des ersten und zweiten Meßrohrs bzw. des dritten und vierten Meßrohrs im V-Mode sind bei symmetrisch aufgebauter Rohranordnung und gleichmäßig durchströmter Rohranordnung zudem bezüglich der zweiten gedachten Längsschnittebene YZ symmetrisch ausgebildet. Die besondere Eignung des V-Modes als Nutzmode für Meßaufnehmer mit vier geraden Meßrohren konnte dabei nicht zuletzt auch auf die für das Schwingverhalten des Meßaufnehmers - sowohl räumlich als auch zeitlich gesehen - dabei insgesamt sehr günstig ausfallenden Spannungsverteilung im Meßaufnehmer, nicht zuletzt auch im Bereich der beiden Strömungsteiler, sowie auch auf die gleichermaßen günstig, mithin sehr gering ausfallenden schwingungsbedingten Deformierungen des Meßaufnehmers im allgemeinen, sowie der Strömungsteiler im besonderen, zurückgeführt werden.

Außer dem vorgenannten V-Mode weist die Rohranordnung zudem auch einen - im weiteren als X-Mode bezeichneten - natürlichen Biegeschwingungsmode zweiter Art auf, in dem -wie in Fig. 7b schematisch dargestellt - das erste Meßrohr und das zweite Meßrohr bezüglich der zweiten gedachten Längsschnittebene YZ gegengleiche Biegeschwingungen um die jeweils zugehörige statische Ruhelage ausführen und in dem das dritte Meßrohr und das vierte Meßrohr bezüglich der zweiten gedachten Längsschnittebene YZ gegengleiche Biegeschwingungen um jeweils zugehörige statische Ruhelage ausführen, im Unterschied zu den Biegeschwingungen im V-Mode, jedoch in der Weise, daß - bezüglich der zweiten gedachten Längsschnittebene YZ - nämliche Biegeschwingungen des ersten Meßrohrs auch gegengleich zu nämlichen Biegeschwingungen des vierten Meßrohrs sind, und daß - bezüglich der zweiten gedachten Längsschnittebene YZ - nämliche Biegeschwingungen des zweiten Meßrohrs auch gegengleich zu nämlichen Biegeschwingungen des dritten Meßrohrs sind. Bei symmetrisch aufgebauter und gleichmäßig von Medium durchströmter Rohranordnung sind im übrigen auch die die Rohranordnung in Projektion auf die Querschnittsebene XY zeitweise X-förmig erscheinen lassenden (vgl. Fig. 7b) - Biegeschwingungen im X-Mode ebenfalls bezüglich der zweiten gedachten Längsschnittebene YZ symmetrisch.

Um eine separate, nicht zuletzt auch definierte Anregung des V-Modes bzw. des X-Modes über einen möglichst weiten - u.a. auch von im Betrieb schwankenden Dichten, Massendurchflußraten, Temperaturverteilungen im Meßaufnehmer etc. geprägten - Betriebsbereich des Meßaufnehmers zu gewährleisten, ist gemäß einer weiteren Ausgestaltung der Erfindung die mittels der vier Meßrohre gebildete Rohranordnung, mithin der damit gebildet Meßaufnehmer, so dimensioniert, daß eine-beispielsweise bei vollständig mit Wasser gefüllter Rohranordnung meßbare - Eigenfrequenz f_{18V}; des Biegeschwingungsmode erster Art (V-Mode), von einer, insb. bei vollständig mit Wasser gefüllter Rohranordnung bzw. zeitgleich zur Eigenfrequenz f_{18V} des Biegeschwingungsmode erster Art (V-Mode) meßbaren, Eigenfrequenz f_{18X} des Biegeschwingungsmode zweiter Art (X-Mode) verschieden ist, beispielsweise so, daß die Eigenfrequenzen f_{18V}; f_{18X};der beiden nämlichen Biegeschwingungsmoden (V-Mode, X-Mode) um 10Hz oder mehr voneinander abweichen. Im besonderen ist, nicht zuletzt auch für den Fall großer nomineller Nennweiten von mehr als 100 mm, die Rohranordnung so ausgebildet, daß, nämliche Eigenfrequenz f_{18V} des Biegeschwingungsmode erster Art um mehr als 10Hz größer als nämliche Eigenfrequenz f_{18X} des Biegeschwingungsmode zweiter Art ist. Die Erregeranordnung ist gemäß einer weiteren Ausgestaltung der Erfindung daher derart ausgebildet, daß damit das erste Meßrohr 18₁ und das zweite Meßrohr 18₂ im Betrieb zu gegengleichen Biegeschwingungen und das dritte Meßrohr 18₄ und das vierte Meßrohr 18₄ im Betrieb gegengleiche Biegeschwingungen anregbar sind, insb. auch dem Biegeschwingungsmode erster Art (V-Mode) entsprechenden Biegeschwingungen auf deren momentaner Eigenfrequenz f_{18V} bzw. dem Biegeschwingungsmode zweiter Art (X-Mode) entsprechenden Biegeschwingungen auf deren momentaner Eigenfrequenz f_{18V}, letztere Biegeschwingungen ggf. auch simultan mit den dem Biegeschwingungsmode erster Art (V-Mode) entsprechenden Biegeschwingungen.

Gemäß einer weiteren Ausgestaltung der Erfindung ist die Erregeranordnung 5, nicht zuletzt auch zwecks Anregung von gegengleichen Biegeschwingungen des ersten und zweiten Meßrohrs und/oder des dritten und vierten Meßrohrs, mittels eines, insb. differentiell auf das erste Meßrohr 18₁ und das zweite Meßrohr 18₂ wirkenden, ersten Schwingungserregers 5₁ gebildet. Ferner ist vorgesehen, daß als erster Schwingungserreger 5₁ ein, insb. differentiell, auf wenigstens zwei der Meßrohre 18₁, 18₂, 18₃, 18₄ wirkender Schwingungserreger vom elektrodynamischen Typ dient. Dementsprechend ist der erster Schwingungserreger 5₁ ferner mittels eines am ersten Meßrohr gehalterten Permanentmagneten und einer von dessen Magnetfeld durchfluteten, am zweiten Meßrohr gehalterten Zylinderspule gebildet ist, insb. nach Art einer Tauchspulenanordnung, bei der die Zylinderspule koaxial zum Permanentmagneten angeordnet und dieser als innerhalb der Spule bewegter Tauchanker ausgebildet ist.

Zwecks Erhöhung des Wirkungsgrades der Erregeranordnung bzw. zwecks der Erhöhung der damit generierten Erregerkräfte bei gleichzeitig möglichst symmetrischem Aufbau umfaßt die Erregeranordnung nach einer Weiterbildung der Erfindung ferner einen, insb. elektrodynamischen und/oder differentiell auf das dritte Meßrohrs 18₃ und das vierte Meßrohr 18₄ wirkenden, zweiten Schwingungserreger 5₂. Der zweite Schwingungserreger 5₂ ist in vorteilhafter Weise zumindest insoweit baugleich zum ersten Schwingungserreger 5₁ ausgebildet, als er analog zu dessen Wirkprinzip arbeitet, beispielsweise also ebenfalls vom elektrodynamischen Typ ist. Gemäß einer weiteren Ausgestaltung ist der zweite Schwingungserreger 5₂ daher mittels eines am dritten Meßrohr gehalterten Permanentmagneten und einer von dessen Magnetfeld durchfluteten, am vierten Meßrohr gehalterten Zylinderspule gebildet. Die beiden Schwingungserreger 5₁, 5₂ der Erregeranordnung 5 können in vorteilhafter Weise elektrisch seriell verschaltet sind, insb. derart, daß ein gemeinsames Treibersignal gemeinsamem mithin simultane Schwingungen der Meßrohre 18₁, 18₃, 18₂, 18₄ anregt, etwa Biegeschwingungen im V-Mode und/oder im X-Mode. Nicht zuletzt für den zuvor erwähnten Fall, daß sowohl Biegeschwingungen im V-Mode als auch Biegeschwingungen im X-Mode mittels der beiden Schwingungserreger 5₁, 5₂ aktiv angeregt werden sollen, kann es von Vorteil sein, die Schwingungserreger 5₁, 5₂ so zu dimensionieren und so an der Rohranordnung anzubringen, daß im Ergebnis ein Übertragungsfaktor des ersten Schwingungserregers 5₁, definiert durch ein Verhältnis von darin eingespeister elektrischer Erregerleistung zu einer damit erzeugten Schwingungen der Meßrohre bewirkende Erregerkraft, zumindest innerhalb eines den V-Mode und den X-Mode umfassenden Frequenzbandes von einem Übertragungsfaktor des zweiten Schwingungserregers 5₁, definiert durch ein Verhältnis von darin eingespeister elektrischer Erregerleistung zu einer damit erzeugten Schwingungen der Meßrohre bewirkende Erregerkraft, verschieden ist, etwa derart, daß nämliche Übertragungsfaktoren um 10% oder mehr voneinander abweichen. Dies ermöglicht beispielsweise auch eine getrennte Anregung von V- und X-Mode, nicht zuletzt auch bei serieller Verschaltung der beiden Schwingungserreger 5₁, 5₂ und/oder Speisung der beiden Schwingungserreger 5₁, 5₂ mit einem einzigen gemeinsamen Treibersignal, und kann im Falle elektrodynamischer Schwingungserreger 5₁, 5₂ z.B. durch Verwendung von Zylinderspulen mit verschieden Impedanzen bzw. unterschiedlichen Windungszahlen und/oder von unterschiedlich dimensionierten bzw. aus unterschiedlichen magnetischen Materialien bestehenden Permanentmagneten auf sehr einfache Weise erreicht werden. Es sei an dieser Stelle zudem ferner noch erwähnt, daß, obgleich der bzw. die Schwingungserreger der im Ausführungsbeispiel gezeigten Erregeranordnung jeweils etwa mittig an den jeweiligen Meßrohren angreifen, alternativ oder in Ergänzung auch eher ein- und auslaßseitig an das jeweilige Meßrohr angreifende Schwingungserreger verwendet werden können, etwa nach Art der in der US-A 48 23 614 oder der US-A 48 31 885 vorgeschlagenen Erregeranordnungen.

Wie aus den Fig. 2, 4a, 4b, 5a, und 5b jeweils ersichtlich und bei Meßaufnehmern der in Rede stehenden Art üblich, ist im Meßaufnehmer 11 ferner eine auf, insb. einlaß- und auslaßseitige, Vibrationen, insb. mittels der Erregeranordnung 5 angeregte Biegeschwingungen, der Meßrohre 18₁, 18₂, 18₃ bzw. 18₄ reagierende, beispielsweise elektro-dynamische, Sensoranordnung 19 zum Erzeugen von Vibrationen, insb. Biegeschwingungen, der Meßrohre repräsentierenden Schwingungssignalen vorgesehen, die beispielsweise hinsichtlich einer Frequenz, einer Signalamplitude und/oder einer Phasenlage - relativ zueinander und/oder relativ zum Treibersignal - von der von der zu erfassenden Meßgröße, wie etwa der Massendurchflußrate und/oder der Dichte bzw. einer Viskosität des Mediums, mit beeinflußt sind.

Gemäß einer weiteren Ausgestaltung der Erfindung ist die Sensoranordnung mittels eines, insb. elektrodynamischen und/oder zumindest Schwingungen des ersten Meßrohrs 18₁ relativ zum zweiten Meßrohr 18₂ differentiell erfassenden, einlaßseitigen ersten Schwingungssensors 19₁ sowie eines, insb. elektrodynamischen und/oder zumindest Schwingungen des ersten Meßrohrs 18₁ relativ zum zweiten Meßrohr 18₂ differentiell erfassenden, auslaßseitigen zweiten Schwingungssensors 19₂ gebildet, welche beiden Schwingungssensoren jeweils auf Bewegungen der Meßrohre 18₁, 18₂, 18₃, 18₄, insb. deren laterale Auslenkungen und/oder Verformungen, reagierend, ein erstes bzw. zweites Schwingungssignal liefern. Dies im besonderen in der Weise, daß wenigstens zwei der von der Sensoranordnung 19 gelieferten Schwingungssignale eine gegenseitige Phasenverschiebung aufweisen, die mit der momentanen Massendurchflußrate des durch die Meßrohre hindurchströmenden Mediums korrespondiert bzw. davon abhängig ist, sowie jeweils eine Signalfrequenz aufweisen, die von einer momentanen Dichte des in den Meßrohren strömenden Mediums abhängig sind. Die beiden, beispielsweise einander baugleichen, Schwingungssensoren 19₁, 19₂ können dafür - wie bei Meßaufnehmern der in Rede stehenden Art durchaus üblich - im wesentlichen äquidistant zum ersten Schwingungserreger 5₁ im Meßaufnehmer 11 plaziert sein. Überdies können die Schwingungssensoren der Sensoranordnung 19 zumindest insoweit baugleich zum wenigstens einen Schwingungserreger der Erregeranordnung 5 ausgebildet sein, als sie analog zu dessen Wirkprinzip arbeiten, beispielsweise also ebenfalls vom elektrodynamischen Typ sind. Gemäß einer Weiterbildung der Erfindung ist die Sensoranordnung 19 zudem auch mittels eines, insb. elektrodynamischen und/oder Schwingungen des dritten Meßrohrs 18₃ relativ zum vierten Meßrohr 18₄ differentiell erfassenden, einlaßseitigen dritten Schwingungssensors 19₃ sowie eines, insb. elektrodynamischen und/oder Schwingungen des dritten Meßrohrs 18₃ relativ zum vierten Meßrohr 18₄ differentiell erfassenden, auslaßseitigen vierten Schwingungssensors 19₄ gebildet. Zur weiteren Verbesserung der Signalqualität wie auch zur Vereinfachung der die Meßsignale empfangenden Umformer-Elektronik 12 können desweiteren der erste und dritte Schwingungssensor 19₁, 19₃ elektrisch seriell verschaltet sein, beispielsweise derart, daß ein gemeinsames Schwingungssignal gemeinsame einlaßseitige Schwingungen des ersten und dritten Meßrohrs 18₁, 18₃ relativ zum zweiten und vierten Meßrohr 18₂, 18₄ repräsentiert. Alternativ oder in Ergänzung können auch der zweite und vierte Schwingungssensor 19₂, 19₄ derart elektrisch seriell verschaltet sein, daß ein gemeinsames Schwingungssignal beider Schwingungssensoren 19₂, 19₄ gemeinsame auslaßseitige Schwingungen des ersten und dritten Meßrohrs 18₁, 18₃ relativ zum zweiten und vierten Meßrohr 18₂, 18₄ repräsentiert.

Für den vorgenannten Fall, daß die, insb. einander baugleichen, Schwingungssensoren der Sensoranordnung 19 Schwingungen der Meßrohre differentiell und elektrodynamisch erfassen sollen, sind der erste Schwingungssensor 19₁ mittels eines - hier im Bereich einlaßseitig zu erfassender Schwingungen - am ersten Meßrohr gehalterten Permanentmagneten und einer von dessen Magnetfeld durchfluteten, am zweiten Meßrohr - hier entsprechend ebenfalls im Bereich einlaßseitig zu erfassender Schwingungen - gehalterten Zylinderspule, und der zweite Schwingungssensor 19₂ mittels eines - im Bereich auslaßseitig zu erfassender Schwingungen - am ersten Meßrohr gehalterten Permanentmagneten und einer von dessen Magnetfeld durchfluteten, am zweiten Meßrohr gehalterten - hier entsprechend ebenfalls im Bereich auslaßseitig zu erfassender Schwingungen - Zylinderspule gebildet. Gleichermaßen können zudem auch der ggf. vorgesehene dritte Schwingungssensor 19₃ entsprechend mittels eines am dritten Meßrohr gehalterten Permanentmagneten und einer von dessen Magnetfeld durchfluteten, am vierten Meßrohr gehalterten Zylinderspule, und der ggf. vorgesehene vierte Schwingungssensor 19₄ mittels eines am dritten Meßrohr gehalterten Permanentmagneten und einer von dessen Magnetfeld durchfluteten, am vierten Meßrohr gehalterten Zylinderspule gebildet sein.

Zur Gewährleistung einer möglichst hohen Empfindlichkeit des Meßaufnehmers auf den Massendurchfluß sind nach einer weiteren Ausgestaltung der Erfindung die Meßrohre und die Schwingungssensoren so im Meßaufnehmer angeordnet, daß eine einem entlang einer Biegelinie des ersten Meßrohrs gemessenen Abstand zwischen dem ersten Schwingungssensor 19₁ und dem zweite Schwingungssensor 19₂ entsprechende Meßlänge, L₁₉, des Meßaufnehmers mehr als 500 mm, insb. mehr als 600 mm, beträgt. Nicht zuletzt zur Schaffung eines möglichst kompakten, dennoch aber für den Massendurchfluß möglichst empfindlichen Meßaufnehmers sind nach einer weiteren Ausgestaltung der Erfindung die Schwingungssensoren 19₁, 19₂, abgestimmt auf die Einbaulänge L₁₁ des Meßaufnehmers, so im Meßaufnehmer angeordnet, daß ein Meßlänge-zu-Einbaulänge-Verhältnis L₁₉/L₁₁ des Meßaufnehmers, welches durch ein Verhältnis der Meßlänge zur Einbaulänge des Meßaufnehmers definiert ist, mehr als 0.3, insb. mehr als 0.4 und/oder weniger als 0.7, beträgt. Alternativ oder in Ergänzung sind die Schwingungssensoren nach einer weiteren Ausgestaltung der Erfindung, abgestimmt auf die Meßrohre, so im Meßaufnehmer plaziert, daß ein Kaliber-zu-Meßlänge-Verhältnis D₁₈/L₁₉, des Meßaufnehmers, welches durch ein Verhältnis des Kalibers D₁₈ des ersten Meßrohrs zur erwähnten Meßlänge L₁₉ des Meßaufnehmers definiert ist, mehr als 0.05, insb. mehr als 0.09, beträgt.

Es sei an dieser Stelle zudem noch angemerkt, daß, obgleich es sich bei den Schwingungssensoren der im Ausführungsbeispiel gezeigten Sensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner auch andere dem Fachmann bekannte, wie z.B. opto-elektronische, Schwingungssensoren zur Bildung der Sensoranordnung verwendet werden können. Im übrigen können, wie bei Meßaufnehmern der in Rede stehenden Art durchaus üblich, zusätzlich zu den Schwingungssensoren weitere, insb. Hilfs-bzw. Störgrößen erfassende, Sensoren im Meßaufnehmer vorgesehen sein, wie z.B. Beschleunigungssensoren zum Erfassen von durch äußere Kräfte und/oder Asymmetrien in der Rohranordnung verursachte Bewegungen des gesamten Meßsystems, Dehnungsmeßstreifen zum Erfassen von Dehnungen eines oder mehrerer der Meßrohre und/oder des Aufnehmergehäuses, Drucksensoren zum Erfassen eines im Aufnehmergehäuse herrschenden statischen Drucks und/oder Temperatursensoren zum Erfassen von Temperaturen eines oder mehrerer der Meßrohre und/oder des Aufnehmergehäuses, mittels denen beispielsweise die Funktionstüchtigkeit des Meßaufnehmers und/oder Änderungen der Empfindlichkeit des Meßsaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können.

Die Sensoranordnung 19 ist ferner, wie bei derartigen Meßaufnehmern üblich, in geeigneter Weise mit einer in der Umformer-Elektronik entsprechend vorgesehenen, beispielsweise mittels wenigstens einem Mikroprozessors und/oder mittels wenigstens einem digitalen Signalprozessor gebildete, Meßschaltung gekoppelt, beispielsweise drahtgebunden via Verbindungsleitungen. Die Meßschaltung empfängt die Schwingungssignale der Sensoranordnung 19 und generiert daraus, ggf. auch unter Berücksichtung mittels des wenigstens einen Treibersignals in die Erregeranordnung eingespeister, mithin auch darin umgesetzter elektrischer Erregerleistung, die eingangs erwähnten Meßwerte, die beispielsweise eine Massedurchflußrate, einen totalisierten Massendurchfluß und/oder eine Dichte und/oder eine Viskosität des zu messenden Mediums repräsentieren können, und die ggf. vor Ort angezeigt und/oder auch an ein dem Meßsystem übergeordnetes Datenverarbeitungssystem inform digitaler Meßdaten gesendet und daselbst entsprechend weiterverarbeitet werden können. Im besonderen ist die Meßschaltung, mithin die damit gebildte Umformer-Elektronik ferner dafür vorgesehen und ausgelegt, anhand von in der Erregeranordnung umgesetzter elektrischer Erregerleistung, beispielsweise periodisch wiederkehrend und/oder auf Abruf, einen die Viskosität des strömenden Mediums repräsentierenden Viskosität-Meßwert zu generieren und/oder anhand von vom Meßaufnehmer gelieferten Schwingungssignalen, beispielsweise periodisch wiederkehrend und/oder auf Abruf, einen die Massendurchflußrate des strömenden Mediums repräsentierenden Massendurchfluß-Meßwert und/oder, beispielsweise periodisch wiederkehrend und/oder auf Abruf, einen die Dichte des strömenden Mediums repräsentierenden Dichte-Meßwert zu generieren.

Die oben erwähnte Verwendung differentiell wirkender Schwingungserreger bzw. Schwingungssensoren birgt dabei u.a. auch den Vorteil, daß zum Betreiben des erfindungsgemäßen Meßaufnehmers auch solche etablierten Meß- und Betriebsschaltungen verwendet werden können, wie sie beispielsweise bereits in herkömmlichen Coriolis-Massedurchfluß-/ Dichtemeßgeräten breite Anwendung gefunden haben.

Die Umformer-Elektronik 12, einschließlich der darin realisierten Meß- und Betriebsschaltung, kann desweiteren beispielsweise in einem separaten Elektronik-Gehäuse 7₂ untergebracht sein, das vom Meßaufnehmer entfernt angeordnet oder, wie in Fig. 1 gezeigt, unter Bildung eines einzigen Kompaktgeräts direkt am Meßaufnehmer 1, beispielsweise von außen am Aufnehmer-Gehäuse 7₁, fixiert ist. Bei dem hier gezeigten Ausführungsbeispiel ist daher am Aufnehmer-Gehäuse 7₁ ferner ein dem Haltern des Elektronik-Gehäuses 7₂ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßaufnehmer 11, insb. den darin plazierten Schwingungserregern und Sensoren, und der erwähnten Umformer-Elektronik 12 angeordnet sein.

Wie bereits mehrfach erwähnt ist das In-Line-Meßgerät und insoweit auch der Meßaufnehmer 11 im besonderen für Messungen auch hoher Massendurchflüsse von mehr als 400 t/h in einer Rohrleitung von großem Kaliber von mehr als 100 mm vorgesehen. Dem Rechnung tragend ist nach einer weiteren Ausgestaltung der Erfindung die nominellen Nennweite des Meßaufnehmers 11, die wie bereits erwähnt einem Kaliber der Rohrleitung, in deren Verlauf der Meßaufnehmer 11 einzusetzen ist, entspricht, so gewählt, daß sie mehr als 100 mm beträgt, insb. aber größer als 150 mm ist. Ferner ist nach einer weiteren Ausgestaltung des Meßaufnehmers vorgesehen, daß jedes der Meßrohre 18₁, 18₂, 18₃, 18₄ jeweils ein einem jeweiligen Rohr-Innendurchmesser entsprechendes Kaliber D₁₈ aufweist, das mehr als 40 mm beträgt. Im besonderen sind die Meßrohre 18₁, 18₂, 18₃, 18₄ ferner so ausgebildet, das jedes ein Kaliber D₁₈ von mehr als 60 mm aufweist. Alternativ oder in Ergänzung dazu sind die Meßrohre 18₁, 18₂, 18₃, 18₄ nach einer anderen Ausgestaltung der Erfindung ferner so bemessen, daß sie jeweils eine Meßrohrlänge L₁₈ von wenigstens 1000 mm aufweisen. Die Meßrohrlänge L₁₈ entspricht im hier gezeigten Ausführungsbeispiel mit gleichlangen Meßrohren 18₁, 18₂, 18₃, 18₄ jeweils einer Länge eines zwischen der ersten Strömungsöffnung des ersten Strömungsteilers und der ersten Strömungsöffnung des zweiten Strömungsteilers verlaufenden Abschnitts der Biegelinie des ersten Meßrohrs. Im besonderen sind die Meßrohre 18₁, 18₂, 18₃, 18₄ dabei so ausgelegt, daß deren Meßrohrlänge L₁₈ jeweils größer als 1200 mm ist. Dementsprechend ergibt sich zumindest für den erwähnten Fall, daß die Meßrohre 18₁, 18₂, 18₃, 18₄ aus Stahl bestehen, bei den üblicherweise verwendeten Wandstärken von über 1 mm eine Masse von jeweils wenigstens 20 kg, insb. mehr als 30 kg, aufweist. Ferner ist aber angestrebt, die Leermasse jedes der Meßrohre 18₁, 18₂, 18₃, 18₄ kleiner als 50 kg zu halten.

In Anbetracht dessen, daß, wie bereits erwähnt, jedes der Meßrohre 18₁, 18₂, 18₃, 18₄ bei erfindungsgemäßen Meßaufnehmer durchaus weit über 20 kg wiegen und dabei, wie aus den obigen Maßangaben ohne weiteres ersichtlich, ein Fassungsvermögen von durchaus 10 I oder mehr haben kann, kann dann die die vier Meßrohre 18₁, 18₂, 18₃, 18₄ umfassende Rohranordnung zumindest bei hindurchströmendem Medium mit hoher Dichte eine Gesamt-Masse von weit über 80 kg erreichen. Besonders bei der Verwendung von Meßrohren mit vergleichsweise großem Kaliber D₁₈, großer Wandstärke und großer Meßrohrlänge L₁₈ kann die Masse der von den Meßrohren 18₁, 18₂, 18₃, 18₄ gebildeten Rohranordnung ohne weiteres aber auch größer als 100 kg oder zumindest mit hindurchströmendem Medium, z.B. Öl oder Wasser, mehr als 120 kg betragen. Infolgedessen beträgt eine Leermasse M₁₁ des Meßaufnehmers insgesamt auch weit mehr als 200 kg, bei nominellen Nennweiten D₁₁ von wesentlich größer als 250 mm sogar mehr als 300 kg. Im Ergebnis kann beim erfindungsgemäßen Meßaufnehmer ein Massenverhältnis M₁₁/M₁₈ einer Leermasse M₁₁ des gesamten Meßaufnehmers zu einer Leermasse M₁₈ des ersten Meßrohrs durchaus größer als 10, insb. größer als 15, sein. Um bei den erwähnten hohen Leermassen M₁₁ des Meßaufnehmers das dafür insgesamt verwendete Material möglichst optimal einzusetzen und insoweit das - zumeist auch sehr teure - Material insgesamt möglichst effizient zu nutzen, ist gemäß einer weiteren Ausgestaltung die nominelle Nennweite D₁₁ des Meßaufnehmers abgestimmt auf dessen Leermasse M₁₁ so bemessen, daß ein Masse-zu-Nennweite-Verhältnis M₁₁/D₁₁ des Meßaufnehmers 11, definiert durch ein Verhältnis der Leermasse M₁₁ des Meßaufnehmers 11 zur nominellen Nennweite D₁₁ des Meßaufnehmers 11 kleiner als 2 kg/mm, insb. möglichst aber kleiner als 1 kg/mm ist. Um eine ausreichend hohe Stabilität des Meßaufnehmers 11 zu gewährleisten, ist das Masse-zu-Nennweite-Verhältnis M₁₁/D₁₁ des Meßaufnehmers 11 zumindest im Falle des Verwendens der oben erwähnten herkömmlichen Materialien jedoch möglichst größer als 0.5 kg/mm zu wählen. Ferner ist gemäß einer weiteren Ausgestaltung der Erfindung zur weiteren Verbesserung der Effizienz des eingesetzten Materials vorgesehen, das erwähnte Massenverhältnis M₁₁/M₁₈ kleiner als 25 zu halten. Zur Schaffung eines dennoch möglichst kompakten Meßaufnehmers von ausreichend hoher Schwingungsgüte und möglichst geringem Druckabfall sind nach einer weiteren Ausgestaltung der Erfindung die Meßrohre, abgestimmt auf die oben erwähnte Einbaulänge L₁₁ des Meßaufnehmers 11, so bemessen, daß ein Kaliber-zu-Einbaulänge-Verhältnis D₁₈/L₁₁ des Meßaufnehmers, definiert durch ein Verhältnis des Kalibers D₁₈ zumindest des ersten Meßrohrs zur Einbaulänge L₁₁ des Meßaufnehmers 11, mehr als 0.02, insb. mehr als 0.05 und/oder weniger als 0.09, insb. weniger als 0.07, beträgt. Alternativ oder in Ergänzung sind die Meßrohre 18₁, 18₂, 18₃, 18₄, abgestimmt auf die oben erwähnte Einbaulänge L₁₁ des Meßaufnehmers, so bemessen, daß ein Meßrohrlänge-zu-Einbaulänge-Verhältnis L₁₈/L₁₁ des Meßaufnehmers, definiert durch ein Verhältnis der oben bezeichnten Meßrohrlänge L₁₈ zumindest des ersten Meßrohrs zur Einbaulänge L₁₁ des Meßaufnehmers, mehr als 0.7, insb. mehr als 0.8 und/oder weniger als 1.2, beträgt.

Falls erforderlich, können allfällig oder zumindest potentiell von den vibrierenden, insb. in der erwähnte Weise relativ groß dimensionierten, Meßrohren einlaßseitig oder auslaßseitig im Aufnehmer-Gehäuse verursachte mechanische Spannungen und/oder Vibrationen, z.B. dadurch minimiert werden, daß die vier Meßrohre 18₁, 18₂, 18₃, 18₄ zumindest paarweise ein- und auslaßseitig zumindest paarweise jeweils mittels als sogenannte Knotenplatten dienenden Kopplerelemente - im folgenden Kopplerelemente erster Art - miteinander mechanisch verbunden sind. Darüber hinaus können mittels solcher Kopplerelemente erster Art, sei es durch deren Dimensionierung und/oder deren Positionierung auf den Meßrohren mechanische Eigenfrequenzen der Meßrohre und somit auch mechanische Eigenfrequenzen des mittels der vier Meßrohre sowie daran angebrachten weiteren Komponenten des Meßaufnehmers gebildet Innenteil und insoweit auch dessen Schwingungsverhalten der Rohranordnung insgesamt gezielt beeinflußt werden. Nicht zuletzt können mittels solcher Kopplerelemente erster Art auf einfache, gleichwohl effektive Weise eine ausreichende Separierung des erwähnten V-Modes vom X-Modes hinsichtlich ihrer Eigenfrequenzen f_{18V}; f_{18X}; einerseits, sowie anderseits auch eine Verbesserung der mechanischen Kopplung der vier Meßrohre zum Vergleichmäßigen von von den vier Meßrohren simultan ausgeführten Schwingungen, etwa auch den den aktiv angeregten Biegeschwingungen im Nutzmode erreicht werden. Die als Knotenplatten dienenden Kopplerelemente erster Art können beispielsweise dünne, insb. aus demselben Material wie die Meßrohre gefertigte, Platten- oder Scheiben sein, die jeweils mit der Anzahl und den Außenmaßen der miteinander zu koppelnden Meßrohre entsprechenden, ggf. zusätzlich noch zum Rand hin geschlitzten, Bohrungen versehen sind, so daß die Scheiben zunächst auf die jeweiligen Meßrohre 18₁, 18₂, 18₃ bzw. 18₄ aufgeklemmt und ggf. hernach noch mit dem jeweiligen Meßrohr, beispielsweise durch Hartverlöten oder Schweißen, stoffschlüssig verbunden werden können.

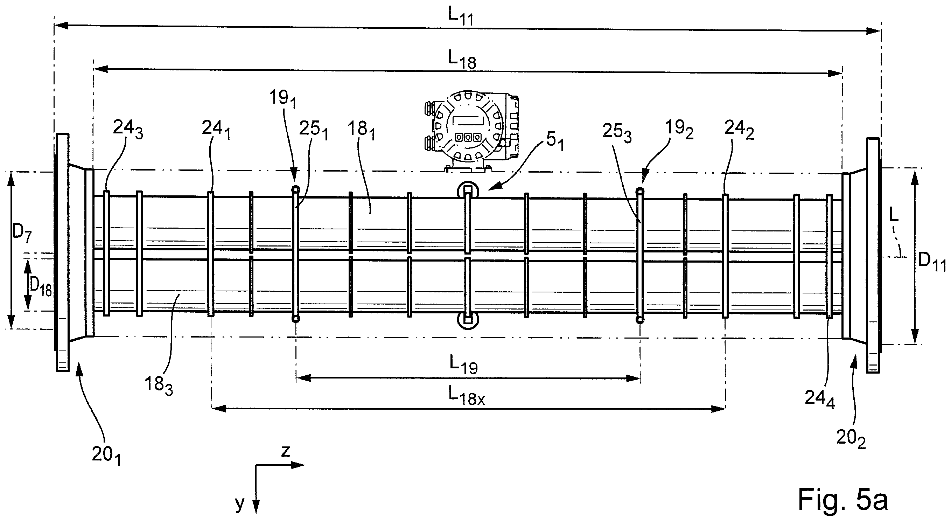

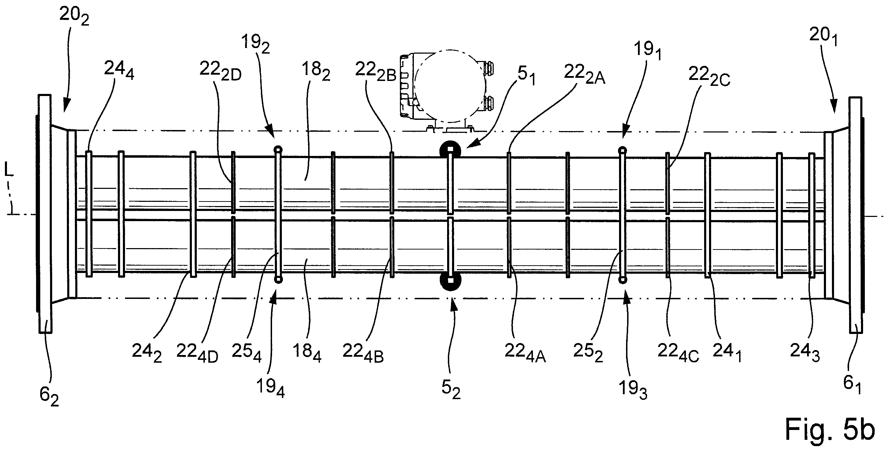

Demnach umfaßt der Meßsystem nach einer weiteren Ausgestaltung der Erfindung, nicht zuletzt auch zwecks Einstellen von Schwingungseigenschaften der Rohranordnung, ferner ein, sowohl vom ersten Strömungsteiler als auch vom zweiten Strömungsteiler beabstandet, einlaßseitig an jedem der vier Meßrohre fixiertes - beispielsweise im wesentlichen X-förmige Grundfläche oder eine im wesentlichen H-förmige Grundfläche aufweisendes - erstes Kopplerelement 24₁ erster Art zum Einstellen von Eigenfrequenzen natürlicher Schwingungsmoden der Rohranordnung bzw. zum Bilden von einlaßseitigen Schwingungsknoten für Vibrationen der Meßrohre, sowie ein - sowohl vom ersten Strömungsteiler als auch vom zweiten Strömungsteiler beabstandet - auslaßseitig an jedem der vier Meßrohre fixiertes, etwa zum ersten Kopplerelement 24₁ erster Art im wesentlichen baugleiches, ggf. auch eine im wesentlichen X-förmige oder im wesentlichen H-förmige Grundfläche aufweisendes, zweites Kopplerelement 24₂ erster Art zum Einstellen von Eigenfrequenzen natürlicher Schwingungsmoden der Rohranordnung bzw. zum Bilden von auslaßseitigen Schwingungsknoten für Vibrationen der Meßrohre. Die Kopplerelemente 24₁ erster Art können beispielsweise jeweils mittels plattenförmiger Teilelemente gebildet oder mittels eines monolithischen Stanz-Biegeteils hergestellt sein. Die beiden Kopplerelemente erster Art sind im in der Fig. 4a, 4b bzw. 5a, 5b gezeigten Ausführungsbeispiel ferner so ausgebildet und an den Meßrohren angebracht, daß sie bezüglich der erwähnten ersten gedachten Längsschnittebene XZ des Meßaufnehmers bzw. bezüglich der erwähnten zweiten gedachten Längsschnittebene YZ des Meßaufnehmers im wesentlichen symmetrisch sind, mithin also die erste gedachte Längsschnittebene XZ und/oder die zweite gedachte Längsschnittebene YZ jeweils auch Symmetrieebene jedes der beiden Kopplerelemente erster Art ist. Die beiden Kopplerelemente erster Art sind darüberhinaus auch bezüglich der erwähnten gedachten Querschnittsebene XY des Meßaufnehmers vorzugsweise symmetrisch, mithin bezüglich nämlicher Querschnittsebene XY äquidistant und parallel verlaufend, im Meßaufnehmer angeordnet. Jedes der vorgenannten, insb. einander baugleichen, Kopplerelemente 24₁, 24₂ erster Art ist gemäß einer weiteren Ausgestaltung der Erfindung plattenförmig ausgebildet, insb. in derart, daß es - wie auch aus der Zusammenschau der Figuren ohne weiteres ersichtlich - in Projektion auf die erwähnte gedachte Querschnittsebene XY des Meßaufnehmers eine eher rechteckförmige oder auch quadratische, oder aber auch eine eher runde oder eine ovale Grundfläche aufweist. Nicht zuletzt auch zum Erreichen einer möglichst einfachen, gleichwohl effektiven Separierung des vorgenannten V-Modes der Rohranordnung vom dieser ebenfalls innewohnenden X-Mode hinsichtlich von deren Eigenfrequenzen f_{18V}, f_{18X}, kann es aber durchaus auch von Vorteil sein, jedes der beiden Kopplerelemente 24₁, 24₂ erster Art so auszubilden, daß es - in Projektion auf die erwähnte gedachte Querschnittsebene XY des Meßaufnehmers - jeweils eine kreuz- bzw. X-förmig oder auch eine eher H-förmige Grundfläche aufweist. Wie aus den Fig. 4 bzw. 5a, 5b ohne weiteres ersichtlich, sind die beiden vorgenannten Kopplerelemente 24₁, 24₂ erster Art ferner so ausgebildet und im Meßaufnehmer so plaziert, daß ein Massenschwerpunkt des ersten Kopplerelements 24₁ erster Art einen Abstand zu einem Massenschwerpunkt des Meßaufnehmers 11 aufweist, der im wesentlichen gleich ist mit einem Abstand eines Massenschwerpunkt des zweiten Kopplerelements 24₂ erster Art zu nämlichen Massenschwerpunkt des Meßaufnehmers 11, insb. so, daß die beiden Kopplerelemente 24₁, 24₂ im Ergebnis symmetrisch zu einer die Meßrohre 18₁, 18₂, 18₃, 18₄ jeweils in Mitte schneidenden gemeinsamen gedachten Querschnittsebene angeordnet sind. Ferner können die beiden Kopplerelemente 24₁, 24₂ zueinander im wesentlichen parallel verlaufend ausgerichtet sein.

Zur weiteren Erhöhung der Freiheitsgrade bei der Optimierung des Schwingungsverhaltens des mittels der vier Meßrohre 18₁, 18₂, 18₃, 18₄ gebildeten Innenteils umfaßt der Meßaufnehmer 11 nach einer Weiterbildung der Erfindung ferner ein drittes Kopplerelement 24₃ erster Art, das zum Bilden von einlaßseitigen Schwingungsknoten zumindest für Vibrationen, insb. Biegeschwingungen, des dritten Meßrohrs 183 und für dazu gegenphasige Vibrationen, insb. Biegeschwingungen, des vierten Meßrohrs 18₄ sowohl vom ersten Strömungsteiler 20₁ als auch vom zweiten Strömungsteiler 20₂ beabstandet einlaßseitig zumindest am dritten 183 Meßrohr und am vierten Meßrohr 18₄ fixiert ist. Darüberhinaus umfaßt der Meßaufnehmer 11 bei dieser Weiterbildung ein, insb. zum dritten Kopplerelement 24₃ erster Art baugleiches, viertes Kopplerelement 24₄ erster Art, das zum Bilden von auslaßseitigen Schwingungsknoten zumindest für Vibrationen, insb. Biegeschwingungen, des dritten Meßrohrs 18₃ und für dazu gegenphasige Vibrationen, insb. Biegeschwingungen, des vierten Meßrohrs 18₄ sowohl vom ersten Strömungsteiler 20₁ als auch vom zweiten Strömungsteiler 202 wie auch vom dritten Kopplerelement 24₃ erster Art beabstandet auslaßseitig zumindest am dritten Meßrohr 18₃ und am vierten Meßrohr 18₄ fixiert ist.

Wie aus der Zusammenschau der Fign. 4, 5a und 5b desweiteren ersichtlich, definierte ein minimaler Abstand zwischen dem dem Massenschwerpunkt des Meßaufnehmers 11 am nähesten liegenden einlaßseitig am jeweiligen Meßrohr fixierten Kopplerelement erster Art - hier also dem ersten Kopplerelement 24₁ erster Art - und dem dem Massenschwerpunkt des Meßaufnehmers am nähesten liegenden auslaßseitig an nämlichem Meßrohr fixierten Kopplerelement erster Art - hier also dem zweiten Kopplerelement 24₂ erster Art - jeweils eine Nutz-Schwinglänge, L₁₈ₓ, selbigen Meßrohrs, wobei nach einer weiteren Ausgestaltung der Erfindung die Kopplerelemente erster Art so im Meßaufnehmer plaziert sind, daß im Ergebnis die Nutz-Schwinglänge jedes der Meßrohre 18₁, 18₂, 18₃, 18₄ weniger als 2500 mm, insb. weniger als 2000 mm und/oder mehr als 800 mm, beträgt. Alternativ oder in Ergänzung ist ferner vorgesehen, daß alle vier Meßrohre 18₁, 18₂, 18₃, 18₄ die gleiche Nutz-Schwinglänge L₁₈ₓ aufweisen. Es kann ferner im Sinne einer noch einfacheren und noch genaueren Einstellung des Schwingungsverhaltens des Meßaufnehmers wie auch zwecks einer weiteren Minimierung von den vibrierenden, ggf. auch relativ groß dimensionierten Meßrohren einlaßseitig oder auslaßseitig im Aufnehmer-Gehäuse potentiell verursachte mechanische Spannungen und/oder Vibrationen durchaus von Vorteil sein, wenn der Meßaufnehmer darüberhinaus noch weitere, dem Bilden von ein- bzw. auslaßseitigen Schwingungsknoten für Vibrationen, insb. Biegeschwingungen, des ersten Meßrohrs und für dazu gegenphasige Vibrationen, insb. Biegeschwingungen, des zweiten Meßrohrs bzw. für Vibrationen, insb. Biegeschwingungen, des dritten Meßrohrs und für dazu gegenphasige Vibrationen, insb. Biegeschwingungen, des vierten Meßrohrs dienende Kopplerelemente der vorgenannten Art aufweist, beispielsweise also insgesamt 6 oder 8 solcher Kopplerelemente erster Art.

Zwecks Bereitstellung eines möglichst kompakten Meßaufnehmers von ausreichend hoher Schwingungsgüte und hoher Empfindlichkeit auf Massendurchfluß bei möglichst geringem Druckabfall sind nach einer weiteren Ausgestaltung der Erfindung sind die Schwingungssensoren, abgestimmt auf die Einbaulänge des Meßaufnehmers, so im Meßaufnehmer angeordnet, daß ein Meßlänge-zu-Einbaulänge-Verhältnis des Meßaufnehmers, welches durch ein Verhältnis der Meßlänge zur Einbaulänge des Meßaufnehmers definiert ist, mehr als 0.3, insb. mehr als 0.4 und/oder weniger als 0.7, beträgt, und/oder sind die Schwingungssensoren, abgestimmt auf die Nutz-Schwinglänge, so im Meßaufnehmer angeordnet, daß ein Meßlänge-zu-Schwinglänge-Verhältnis des Meßaufnehmers, definiert durch ein Verhältnis der erwähnten Meßlänge des Meßaufnehmers zur Nutz-Schwinglänge des ersten Meßrohrs, mehr als 0.6, insb. mehr als 0.65 und/oder weniger als 0.95, beträgt. Alternativ oder in Ergänzung sind die Schwingungssensoren nach einer weiteren Ausgestaltung der Erfindung, abgestimmt auf die Meßrohre, so im Meßaufnehmer plaziert, daß ein Kaliber-zu-Meßlänge-Verhältnis D₁₈/L₁₉, des Meßaufnehmers, welches durch ein Verhältnis des Kalibers D₁₈ des ersten Meßrohrs zur Meßlänge L₁₉ des Meßaufnehmers definiert ist, mehr als 0.05, insb. mehr als 0.09, beträgt. Gemäß einer weiteren Ausgestaltung der Erfindung ist ferner die oben erwähnte Meßlänge L₁₉ kleiner als 1200 mm gehalten. Ferner sind nach einer weiteren Ausgestaltung der Erfindung die Meßrohre 18₁, 18₂, 18₃, 18₄, abgestimmt auf die erwähnte Nutz-Schwinglänge, so bemessen, daß ein Kaliber-zu-Schwinglänge-Verhältnis D₁₈/L₁₈ₓ des Meßaufnehmers, definiert durch ein Verhältnis des Kalibers D₁₈ des ersten Meßrohrs zur Nutz-Schwinglänge L₁₈ₓ des ersten Meßrohrs, mehr als 0.07, insb. mehr als 0.09 und/oder weniger als 0.15, beträgt. Alternativ oder in Ergänzung hierzu sind nach einer weiteren Ausgestaltung der Erfindung die Meßrohre 18₁, 18₂, 18₃, 18₄, abgestimmt auf die oben erwähnte Einbaulänge L₁₁ des Meßaufnehmer, so bemessen, daß ein Schwinglänge-zu-Einbaulänge-Verhältnis L₁₈ₓ/ L₁₁ des Meßaufnehmers, definiert durch ein Verhältnis der Nutz-Schwinglänge L₁₈ₓ des ersten Meßrohrs zur Einbaulänge L₁₁ des Meßaufnehmers, mehr als 0.55, insb. mehr als 0.6 und/oder weniger als 0.9, beträgt.

Gemäß einer weiteren Ausgestaltung der Erfindung ist ferner vorgesehen, die Meßrohre 18₁, 18₂, 18₃, 18₄ im Betrieb im erwähnten V-Mode schwingen und dabei auch anteilig nützliche Torsionsschwingungen um eine jeweilige, zu den erwähnten Verbindungsachsen Z_{1,} Z₂, Z₃, Z₄ parallele bzw. damit koinzidierende Torsionsschwingungsachse ausführen zu lassen, etwa zweck Messung der Viskosität des Mediums und/oder zwecks erweiterter Meßaufnehmer-Diagnose. Dafür umfaß der Meßaufnehmer gemäß einer weiteren Ausgestaltung der Erfindung ferner ein, insb. plattenförmiges oder stabförmiges, erstes Kopplerelement 25₁ zweiter Art sowohl vom ersten Kopplerelement 24₁ erster Art als auch vom zweiten Kopplerelement 24₂ erster Art beabstandet am ersten Meßrohr 18₁ und am dritten Meßrohr 18₃ ansonsten aber an keinem anderen der Meßrohre, insoweit also lediglich am ersten Meßrohr 18₁ und am dritten Meßrohr 18₃ fixiert ist. Desweiteren umfaßt der Meßaufnehmer zumindest bei dieser Ausgestaltung der Erfindung wenigstens ein, insb. plattenförmiges oder stabförmiges, zweites Kopplerelement 25₂ zweiter Art, das sowohl vom ersten Kopplerelement 24₁ erster Art als auch vom zweiten Kopplerelement 24₁ erster Art wie auch vom ersten Kopplerelement 25₁ zweiter Art beabstandet am zweiten Meßrohr 18₂ und am vierten Meßrohr 18₄ ansonsten aber an keinem anderen der Meßrohre, insoweit also lediglich am zweiten Meßrohr 18₂ und am vierten Meßrohr 18₄ fixiert ist. Wie aus der Zusammenschau der Fig. 4, 5a und 5b ohne weiteres ersichtlich, sind das erste und zweite Kopplerelement 25₁, 25₂ zweiter Art möglichst einander gegenüberliegend im Meßaufnehmer 11 plaziert. Darüberinaus umfaßt der Meßaufnehmer ferner ein, beispielsweise wiederum plattenförmiges oder stabförmiges, drittes Kopplerelement 25₃ zweiter Art sowohl vom ersten Kopplerelement 24₁ erster Art als auch vom zweiten Kopplerelement 24₂ erster Art wie auch vom ersten Kopplerelement 25ᵢ zweiter Art beabstandet am ersten Meßrohr 18₁ und am dritten Meßrohr 18₃ ansonsten aber an keinem anderen der Meßrohre, insoweit also lediglich am ersten Meßrohr 18₁ und am dritten Meßrohr 18₃ fixiert ist, sowie ein, insb. plattenförmiges oder stabförmiges, viertes Kopplerelement 25₄ zweiter Art sowohl vom ersten und zweiten Kopplerelement erster Art als auch vom zweiten und dritten Kopplerelement zweiter Art jeweils beabstandet am zweiten Meßrohr 18₂ und am vierten Meßrohr 18₄ ansonsten aber an keinem anderen der Meßrohre, insoweit also lediglich am zweiten Meßrohr 18₂ und am vierten Meßrohr 18₄ fixiert ist. Das dritte und vierte Kopplerelement 25₃, 25₄ zweiter Art sind, wie aus der Zusammenschau der Fig. 4, 5a und 5b ohne weiteres ersichtlich, vorzugsweise ebenfalls einander gegenüberliegend im Meßaufnehmer 11 plaziert. Im hier gezeigten Ausführungsbeispiel sind das erste und zweite Kopplerelement 25₁ zweiter Art jeweils im Bereich des einlaßseitigen ersten Schwingungssensors am ersten und dritten Meßrohr 18₁, 18₃ bzw. am zweiten und vierten Meßrohr 18₂, 18₄ fixiert. Analog dazu sind das dritte und vierte Kopplerelement 25₃ zweiter Art jeweils im Bereich des auslaßseitigen zweiten Schwingungssensors am ersten und dritten Meßrohr 181, 18₃ bzw. zweiten und vierten Meßrohr 18₂, 18₄ fixiert.

Desweiteren kann es von Vorteil sein, vorgenannte Kopplerelemente zweiter Art ferner auch zum Haltern einzelner Komponenten der Sensoranordnung verwenden. Demnach ist nach einer weiteren Ausgestaltung der Erfindung vorgesehen, daß der einlaßseitige erste Schwingungssensor 19₁ anteilig jeweils am ersten und zweiten Kopplerelement 25₁, 25₂ zweiter Art gehaltert ist. Ferner ist der zweite Schwingungssensor 19₂ in entsprechender Weise am dritten und vierten Kopplerelement 25₃, 25₄ zweiter Art gehaltert. Beispielsweise können im Falle elektro-dynamischer Schwingungssensoren die Zylinderspule des ersten Schwingungssensors 19₁ am ersten Kopplerelement zweiter Art und der zugehörige Permanentmagnet am gegenüberliegenden zweiten Kopplerelement zweiter Art bzw. die Zylinderspule des zweiten Schwingungssensors 19₂ am dritten und der zugehörige Permanentmagnet am gegenüberliegenden vierten Kopplerelement zweiter Art fixiert sein. Für den erwähnten Fall, daß die Sensoranordnung 19 mittels vier Schwingungssensoren 19₁, 19₂, 19₃, 19₄ gebildet ist, sind nach einer weiteren Ausgestaltung der Erfindung sowohl der erste Schwingungssensor 19₁ als auch der dritte Schwingungssensor 19₃ jeweils anteilig am ersten und zweitenKopplerelement zweiter Art gehaltert, insb. derart, daß, wie aus der Zusammenschau der Fig. 4, 5a und 5b ohne weiteres ersichtlich, ein minimaler Abstand zwischen dem ersten und dritten Schwingungssensor 19₁, 19₃ mehr als doppelt so groß ist, wie ein Rohr-Außendurchmessers des ersten Meßrohrs 18₁. In entsprechender Weise können zudem auch der zweite Schwingungssensor 19₂ und der vierte Schwingungssensor 19₄ jeweils am dritten und vierten Kopplerelement zweiter Art gehaltert sein, insb. in der Weise, daß, wie aus der Zusammenschau der Fig. 4, 5a und 5b ohne weiteres ersichtlich, ein minimaler Abstand zwischen dem zweiten und vierten Schwingungssensor 19₂, 19₄ mehr als doppelt so groß ist, wie ein Rohr-Außendurchmessers des ersten Meßrohrs 18₁, wodurch insgesamt ein optimale Ausnutzung des im Innenraum des Aufnehmer-Gehäuses 7₁ angeboten Platzes wie auch eine einfache Montage der Schwingungssensoren der Sensoranordnung 19 ermöglicht ist. Daher ist nach einer weiteren Ausgestaltung der Erfindung jeder der, insb. baugleichen, Schwingungssensoren der Sensoranordnung 19 an zwei einander gegenüberliegenden Kopplerelementen zweiter Art gehaltert.

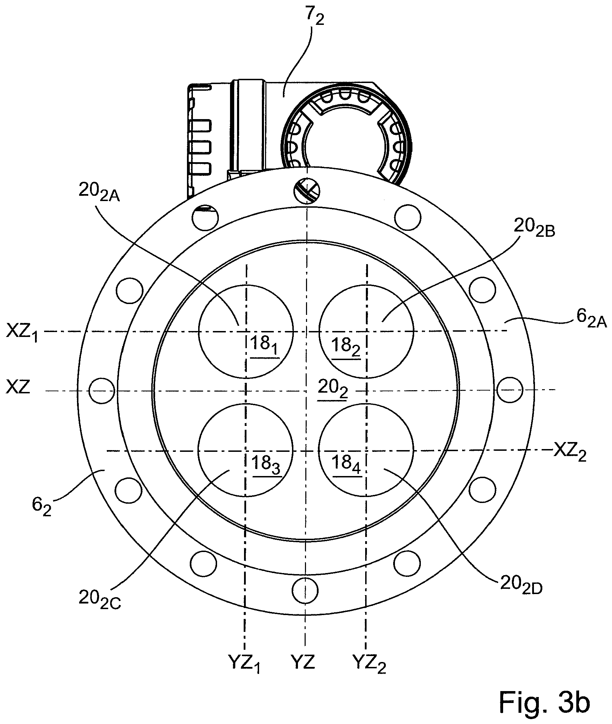

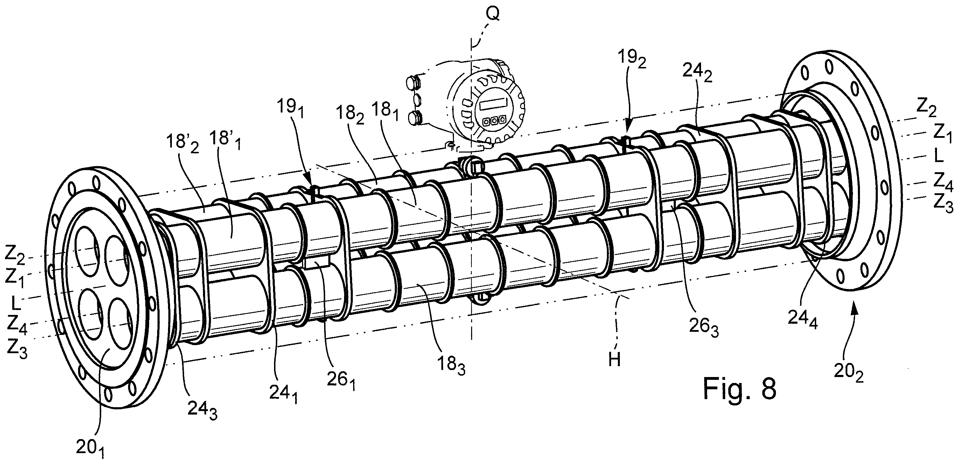

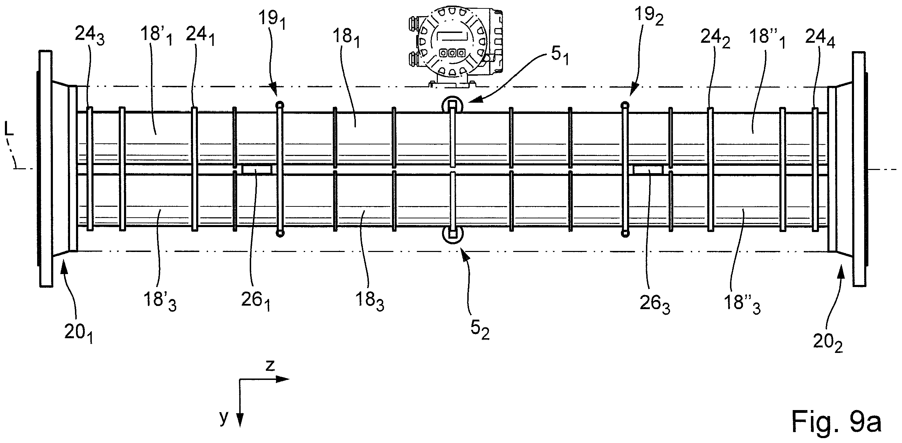

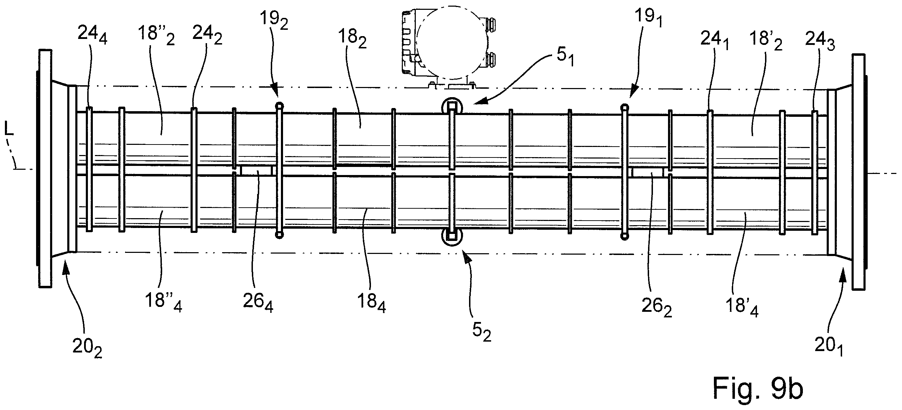

Zur Verringerung allfälliger Querempfindlichkeiten des Meßaufnehmers auf Druck, nicht zuletzt auch bei einem möglichst hohen Nennweite-zu-Einbaulänge-Verhältnis D₁₁/L₁₁ von größer als 0.1 und einem möglichst niedrigen Schwinglänge-zu-Einbaulänge-Verhältnis L₁₈ₓ/L₁₁ von weniger als 1.5, utmfaßt der Meßaufnehmer gemäß einer weiteren Ausgestaltung der Erfindung eine Vielzahl von ringförmigen, insb. einander baugleichen, Versteifungselementen 22_{1A,....}22_{2A,...}22_{3A,...}22_{4A,...} von denen jedes an genau einem der Meßrohre 18₁, 18₂, 18₃, 18₄ so angebracht ist, daß es dieses entlang einer von dessen, insb. zirkulär umlaufenden, gedachten Umfangslinien umgreift, vgl. hierzu auch die eingangs erwähnte US-B 69 20 798. Im besonderen ist hierbei ferner vorgesehen, daß auf jedem der Meßrohre 18₁, 18₂, 18₃ bzw. 18₄, wenigstens vier, insb. baugleiche, nämlicher Versteifungselemente 22_{1A}, 22_{1B}, 22_{1C}, 22₁₀ bzw. 22_{2A}, 22_{2B}, 22_{2C}, 22_{2D} bzw. 22_{3A}, 22_{3B}, 22_{3C}, 22_{3D} bzw. 22_{4A}, 22_{4B}, 22_{4C}, 22_{4D} angebracht sind. Die Versteifungselementen 22_{1A},...22_{2A},...22_{3A},...22_{4A},... sind in vorteilhafter Weise so im Meßaufnehmer 11 plaziert, daß zwei auf demselben Meßrohr angebrachte, benachbarte Versteifungselementen zueinander einen Abstand aufweisen, der mindestens 70% eines Rohr-Außendurchmessers nämlichen Meßrohrs, höchstens aber 150% selbigen Rohr-Außendurchmessers beträgt. Als besonders geeignet hat sich hierbei ein gegenseitiger Abstand benachbarter Versteifungselementen erwiesen, der im Bereich von 80% bis 120% des Rohr-Außendurchmessers des jeweiligen Meßrohrs 18₁, 18₂, 18₃ bzw. 18₄ liegt. Alternativ oder in Ergänzung dazu ist zur Verbesserung der Schwingungseigenschaften des Innenteils und insoweit auch zur Verbesserung der Meßgenauigkeit des Meßaufnehmers ferner vorgesehen, daß der Meßaufnehmer, wie in den Fign. 7, 8a, 8b schematisch dargestellt, desweiteren plattenförmige Versteifungselemente 26₁, 26₂, 26₃, 26₄ zum Einstellen der natürlichen Eigenfrequenzen von Biegeschwingungen der Meßrohre 18₁, 18₂, 18₃ bzw. 18₄ auch in jenen Schwingungsebenen YZ₁, YZ₂, die, wie in Zusammenschau auch mit den Fign. 3a, 3b ersichtlich, zu den oben erwähnten Schwingungsebene XZ₁, XZ₂ im wesentlichen senkrecht sind, aufweist. Die, beispielsweise einander baugleichen, plattenförmigen Versteifungselemente 26₁, 26₂, 26₃, 26₄ sind dabei im besonderen so ausgebildet und jeweils so mit den Meßrohren verbunden, daß im Ergebnis zumindest die Biegeschwingungs-Resonanzfrequenzen der Biegeschwingungen der Meßrohre 18₁, 18₂, 18₃ bzw. 18₄ in dem in den vorgenannten - primären - Schwingungsebenen XZ₁, XZ₂ angeregten Nutzmode stets niedriger sind, als die natürlichen Eigenfrequenzen von Biegeschwingungen der Meßrohre , die von gleicher modaler Ordnung wie der Nutzmode sind, jedoch innerhalb der - insoweit sekundären - Schwingungsebenen YZ₁, YZ₂ ausgeführt würden. Dadurch kann auf sehr einfache, gleichwohl sehr effektive Weise hinsichtlich der jeweiligen Resonanzfrequenzen der Meßrohre eine signifikante Separierung der Biegeschwingungsmoden der Meßrohre in den zueinander senkrechten - hier primären und sekundären - Schwingungsebenen des Innenteils bzw. der Meßrohre erzielt werden. Dafür umfaßt der Meßaufnehmer in einer weiteren, aus der Zusammenschau der Fig. 8, 9a, 9b ohne weiteres ersichtlichen, Ausgestaltung der Erfindung ein erstes plattenförmiges Versteifungselement 26₁, das zum Einstellen einer oder mehrerer Resonanzfrequenzen von Biegeschwingungen des ersten Meßrohrs 18₁ und des dritten Meßrohrs 18₃ in einer zu den - primären - Schwingungsebenen XZ₁ bzw. XZ₂ jeweils im wesentlichen senkrechten - sekundären - dritten Schwingungsebene YZ₁ am ersten Meßrohr 18₁ und am dritten Meßrohr 18₃ fixiert ist, und zwar jeweils an einem zwischen dem ersten Schwingungserreger 5₁ und dem ersten Strömungsteiler 20₁ liegenden Segment 18'₁, 18'₃ des ersten bzw. dritten Meßrohrs 18₁, 18₃. Ferner umfaßt der Meßaufnehmer bei dieser Ausgestaltung der Erfindung ein zweites plattenförmiges Versteifungselement 26₂, das zum Einstellen einer oder mehrerer Resonanzfrequenzen von Biegeschwingungen des zweiten Meßrohrs 18₂ und des vierten Meßrohrs 18₄ in einer zu den - primären - Schwingungsebenen XZ₁ bzw. XZ₂ im wesentlichen senkrechten - insoweit also auch zur vorgenannten dritten Schwingungsebene YZ₁ im wesentlichen parallelen, sekundären - vierten Schwingungsebene YZ₂ am zweiten Meßrohr 18₂ und am vierten Meßrohr 18₄ fixiert ist, nämlich jeweils an einem zwischen dem ersten Schwingungserreger 5₁ und dem ersten Strömungsteiler 20₁ liegenden Segment 18'₂, 18'₄ des zweiten bzw. vierten Meßrohrs 18₂, 18₄. Außerdem weist der Meßaufnehmer ein drittes plattenförmiges Versteifungselement 26₃, das zum Einstellen nämlicher Resonanzfrequenzen des ersten Meßrohrs 18₁ und des dritten Meßrohrs 18₃ in der dritten Schwingungsebene YZ₁ am ersten Meßrohr 18₁ und am dritten Meßrohr 18₃ fixiert ist - hier jeweils an einem zwischen dem ersten Schwingungserreger 5₁ und dem zweiten Strömungsteiler 20₂ liegenden Segment 18"₁, 18"₃ des ersten bzw. dritten Meßrohrs 18₁, 18₃ - sowie ein viertes plattenförmiges Versteifungselement 26₄, das zum Einstellen nämlicher Resonanzfrequenzen des zweiten Meßrohrs 18₂ und des vierten Meßrohrs 18₄ in der vierten Schwingungsebene YZ₂ am zweiten Meßrohr 18₂ und am vierten Meßrohr 18₄ fixiert ist - hier jeweils an einem ebenfalls zwischen dem ersten Schwingungserreger 5₁ und dem zweiten Strömungsteiler 20₂ liegenden Segment 18"₂, 18"₄ des zweiten bzw. vierten Meßrohrs 18₂, 18₄. Beispielsweise können hierbei die ersten und zweiten plattenförmigen Versteifungselemente 26₁, 26₂ jeweils zwischen dem ersten Schwingungssensor 19₁ und dem ersten Strömungsteiler 20₁, insb. auch zwischen oben erwähnten ersten und dritten Kopplerelementen 24₁, 24₃ erster Art sowie die dritten und vierten plattenförmige Versteifungselement 26₃, 24₄ jeweils zwischen dem zweiten Schwingungssensor 19₂ und dem zweiten Strömungsteiler 20₂, insb. auch zwischen den oben erwähnten zweiten und vierten Kopplerelementen 24₂, 24₄ erster Art plaziert sein. Die plattenförmigen Versteifungselemente können beispielsweise aber auch so im Meßaufnehmer angeordnet werden, daß, wie auch aus der Zusammenschau der Fig. 7, 8a, 8b ersichtlich, das erste und zweite plattenförmige Versteifungselement 26₁, 26₂ jeweils zwischen dem ersten Kopplerelement 24₁ erster Art und dem ersten Schwingungssensor 19₁ plaziert ist; und das dritte und vierte plattenförmige Versteifungselement 26₃, 26₄ jeweils zwischen dem zweiten Kopplerelement 24₂ erster Art und dem zweiten Schwingungssensor 19₂ plaziert ist. Die plattenförmigen Versteifungselemente können durch Löten oder Schweißen mit den jeweiligen Meßrohren verbunden sein. Beispielsweise können die Versteifungselemente dabei in der Weise mit den Meßrohren verbunden sein, daß, wie auch aus der Zusammenschau der Fig. 7, 8a, 8b ersichtlich, das erste plattenförmige Versteifungselement 26₁ an dem zwischen dem ersten Schwingungssensor 19₁ und dem ersten Strömungsteiler 20₁ liegenden Segment 18'₁ des ersten Meßrohrs 18₁ entlang einer von dessen geraden Seitenlinien - hier etwa der dem dritten Meßrohr 18₃ nächstliegenden - sowie an dem gleichermaßen zwischen dem ersten Schwingungssensor 19₁ und dem ersten Strömungsteiler 20₁ liegenden Segment 18'₃ des dritten Meßrohrs 18₃ entlang einer von dessen geraden Seitenlinien - hier etwa der dem ersten Meßrohr nächstliegenden- fixiert sein. In dazu analoger Weise sind dann auch das zweite plattenförmige Versteifungselement 26₂ an den jeweils zwischen dem ersten Schwingungssensor 19₁ und dem ersten Strömungsteiler 20₁ liegenden Segmenten 18'₂ bzw.18'₄ des zweiten und vierten Meßrohrs 18₂, 18₄, das dritte plattenförmige Versteifungselement 26₃ an den jeweils zwischen dem zweiten Schwingungssensor 19₂ und dem zweiten Strömungsteiler 20₂ liegenden Segmenten 18"₁ bzw. 18"₃ des ersten und dritten Meßrohrs 18₁, 18₃ sowie das vierte plattenförmige Versteifungselement 26₄ an den jeweils zwischen dem zweiten Schwingungssensor 19₂ und dem zweiten Strömungsteiler 20₂ liegenden Segment 18"₂, 18"₄ des zweiten und vierten Meßrohrs 18₂, 18₄ entsprechend zu fixieren, und zwar jeweils entlang einer von den geraden Seitenlinien des jeweiligen Meßrohrs. Zum Erzielen einer ausreichenden Separierung der Resonanzfrequenzen ist jedes der vier plattenförmigen Versteifungselemente 26₁, 26₂, 26₃, 26₄ gemäß einerweitern Ausgestaltung der Erfindung ferner jeweils so ausgebildet und so im Meßaufnehmer plaziert, daß es eine einem kleinsten Abstand zwischen den Seitenlinien jener beiden Meßrohre 18₁, 18₃ bzw. 18₂, 18₄, entlang denen es jeweils fixiert ist, entsprechende Höhe aufweist, die kleiner ist als eine in Richtung nämlicher Seitenlinien gemessene Länge des jeweiligen plattenförmigen Versteifungselements 26₁, 26₂, 26₃, 26₄, beispielsweise derart, daß die Höhe weniger als 50%, insb. weniger als 30%, nämlicher Länge beträgt. Desweiteren ist es von Vorteil, wenn jedes der vier plattenförmigen Versteifungselemente 26₁, 26₂, 26₃, 26₄ zudem jeweils so ausgebildet ist, daß die Länge jedes der plattenförmigen Versteifungselemente größer ist, beispielsweise mehr als das Doppelte, insb. mehr als das 5-fache, als eine - quer zu Länge und Höhe gemessene - zugehörige Breite des nämlichen plattenförmigen Versteifungselements 26₁, 26₂, 26₃, 26₄. Alternativ zur Fixierung an den jeweils am nächsten liegende Seitenlinien können die Versteifungselemente beispielsweise aber auch, insb. auch unter Wahrung vorgenannter Höhe-zu-Breite-zu-Länge-Verhältnisse, so ausgebildet und mit den Meßrohren so verbunden sein, daß jedes der Versteifungselemente die jeweiligen zwei Meßrohre im wesentlichen tangential kontaktiert, beispielsweise jeweils entlang der am weitesten außen oder jeweils entlang der am weitesten innen liegenden Seitenlinie jedes der Meßrohre.

Weiterführende Untersuchungen an Meßaufnehmern mit vier geraden, betriebsgemäß im V-Mode schwingengelassen Meßrohren haben ferner gezeigt, daß eine Nullpunktstabilität des Meßaufnehmers dadurch weiter erhöht bzw. eine Empfindlichkeit des Nullpunkt des Meßaufnehmers für den Massendurchfluß dadurch weiter verringert werden kann, indem die Meßrohre, mithin die damit gebildet Rohranordnung so ausgebildet ist, daß jedes der vier Meßrohre jeweils ein wenigstens 40%, insb. wenigstens 60% der Meßrohrlänge, L₁₈, und/oder weniger als 90%, der Meßrohrlänge, L₁₈, ausmachendes - ggf. aber Komponenten der Erregeranordnung, wie etwa einen Permanentmagneten bzw. eine Zylinderspule tragendes - Mittelsegment aufweist, in dem nämliches Meßrohr keine mechanische Verbindung mit einem anderen der Meßrohre aufweist, wie z.B. die erwähnten Kopplerelemente zweite Art und/oder die erwähnten plattenförmigen Versteifungselemente zum Einstellen natürlicher Eigenfrequenzen von Biegeschwingungen der Meßrohre 18₁, 18₂, 18₃ bzw. 18₄ in den Schwingungsebenen YZ₁, YZ₂, und/oder in dem es relativ zu den anderen Meßrohren frei beweglich ist. Es hat sich nämlich gezeigt, daß es für die angestrebt hohe Nullpunktstabilität von Meßaufnehmern der vorgenannten Art von Vorteil sein kann, wenn der V-Mode eine möglichst niedrige Eigenfrequenz aufweist und im Ergebnis dessen ein vergleichsweise großer Frequenzabstand zu den üblicherweise höheren Eigenfrequenzen des Aufnehmergehäuses geschaffen werden kann. Darüberhinaus ist es im Sinne nämlicher Nullpunktstabilität von Vorteil, wenn die Meßrohre keine oder in nur geringem Maße Torsionsschwingungen ausführen.

Durch die Verwendung einer vier statt wie bisher zwei parallel durchströmten geraden Meßrohren aufweisenden, mithin im V-Mode betriebenen Rohranordnung ist es somit auch möglich, Meßaufnehmer der beschriebenen Art auch für große Massendurchflußraten von mehr als 400t/h bzw. mit großen nominellen Nennweiten von weit über 100 mm einerseits mit einer Meßgenauigkeit von über 99,8% bei einem akzeptablem Druckabfall, insb. von weniger als 2 bar, kostengünstig herzustellen und andererseits bei zumindest gleichbleibend hoher Nullpunktstabilität die Einbaumaße wie auch die Leermasse solcher Meßaufnehmer soweit in Grenzen zu halten, daß trotz großer Nennweite die Herstellung, der Transport, der Einbau wie auch der Betrieb immer noch wirtschaftlich sinnvoll erfolgen kann. Besonders auch durch Realisierung voranstehend erläuterter, die Erfindung weiter ausgestaltender Maßnahmen - einzeln oder auch in Kombination - können Meßaufnehmer der in Rede stehenden Art auch bei großer nomineller Nennweite so ausgeführt und so dimensioniert werden, daß ein durch ein Verhältnis der erwähnten Leermasse des Meßaufnehmers zu einer Gesamtmasse der Rohranordnung definiertes Massenverhältnis des Meßaufnehmers ohne weiteres kleiner als 3, insb. kleiner als 2.5, gehalten werden kann.

## Patentansprüche

1. Meßsystem zum Messen einer Dichte und/oder einer Massendurchflußrate, insb. auch eines über ein Zeitintervall totalisierten Gesamt-Massendurchflusses und/oder einer Viskosität, eines in einer Rohrleitung zumindest zeitweise strömenden Mediums, welches Meßsystem einen Meßaufnehmer vom Vibrationstyp zum Erzeugen von Schwingungsmeßsignalen, sowie eine mit dem Meßaufnehmer elektrisch gekoppelte Umformer-Elektronik zum Ansteuern des Meßaufnehmers und zum Auswerten von vom Meßaufnehmer gelieferten Schwingungsmeßsignalen, umfaßt,
- welcher Meßaufnehmer
-- ein Aufnehmer-Gehäuse (7₁), von dem ein einlaßseitiges erstes Gehäuseende mittels eines genau vier jeweils voneinander beabstandete Strömungsöffnungen (20_{1A}, 20_{1B}, 20_{1C}, 20_{1D}) aufweisenden einlaßseitigen ersten Strömungsteilers (20₁) und ein auslaßseitiges zweites Gehäuseende mittels eines genau vier jeweils voneinander beabstandete Strömungsöffnungen (20_{2A}, 20_{2B}, 20_{2C}, 20_{2D}) aufweisenden auslaßseitigen zweiten Strömungsteilers (20₂) gebildet sind,
-- eine Rohranordnung mit genau vier unter Bildung strömungstechnisch parallel geschalteter Strömungspfade an die Strömungsteiler (20₁, 20₂) angeschlossenen baugleichen geraden Meßrohren (18₁, 18₂, 18₃, 18₄) zum Führen von strömendem Medium, von denen
--- ein erstes Meßrohr (18₁) mit einem einlaßseitigen ersten Meßrohrende in eine erste Strömungsöffnung (20_{1A}) des ersten Strömungsteilers (20₁) und mit einem auslaßseitigen zweiten Meßrohrende in eine erste Strömungsöffnung (20_{2A}) des zweiten Strömungsteilers (20₂) mündet,
--- ein zweites Meßrohr (18₂) mit einem einlaßseitigen ersten Meßrohrende in eine zweite Strömungsöffnung (20_{1B}) des ersten Strömungsteilers (20₁) und mit einem auslaßseitigen zweiten Meßrohrende in eine zweite Strömungsöffnung (20_{2B}) des zweiten Strömungsteilers (20₂) mündet,
--- ein drittes Meßrohr (18₃) mit einem einlaßseitigen ersten Meßrohrende in eine dritte Strömungsöffnung (20_{1C}) des ersten Strömungsteilers (20₁) und mit einem auslaßseitigen zweiten Meßrohrende in eine dritte Strömungsöffnung (20_{2C}) des zweiten Strömungsteilers (20₂) mündet und
--- ein viertes Meßrohr (18₄) mit einem einlaßseitigen ersten Meßrohrende in eine vierte Strömungsöffnung (20_{1D}) des ersten Strömungsteilers (20₁) und mit einem auslaßseitigen zweiten Meßrohrende in eine vierte Strömungsöffnung (20_{2D}) des zweiten Strömungsteilers (20₂) mündet,
-- eine elektro-mechanische Erregeranordnung (5) zum Erzeugen und/oder Aufrechterhalten von mechanischen Schwingungen, insb. von Biegeschwingungen, der vier Meßrohre (18₁, 18₂, 18₃, 18₄), sowie
-- eine auf Vibrationen der Meßrohre (18₁, 18₂, 18₃, 18₄) reagierende, insb. mittels einander baugleicher Schwingungssensoren (19₁, 19₂, 19₃, 19₄) gebildete, Vibrationssensoranordnung (19) zum Erzeugen von Vibrationen, insb. Biegeschwingungen, der Meßrohre (18₁, 18₂, 18₃, 18₄) repräsentierenden Schwingungsmeßsignalen aufweist,
--wobei die vier geraden Meßrohre so ausgebildet und so im Meßaufnehmer angeordnet sind,
--- daß die Rohranordnung eine sowohl zwischen dem ersten Meßrohr und dem dritten Meßrohr als auch zwischen dem zweiten Meßrohr und dem vierten Meßrohr liegende erste gedachte Längsschnittebene (XZ), bezüglich der die Rohranordnung spiegelsymmetrisch ist, sowie eine zu deren gedachter erster Längsschnittebene (XZ) senkrechte, sowohl zwischen dem ersten Meßrohr und zweiten Meßrohr als auch zwischen dem dritten Meßrohr und vierten Meßrohr verlaufende zweite gedachte Längsschnittebene (YZ), bezüglich der die Rohranordnung gleichfalls spiegelsymmetrisch ist, aufweist, und
--- daß eine einem minimalen Abstand zwischen der mit dem jeweiligen einlaßseitigen ersten Meßrohrende korrespondierenden Strömungsöffnung (20_{1A}) des ersten Strömungsteilers (20₁) und der mit dem jeweiligen auslaßseitigen zweiten Meßrohrende korrespondierenden Strömungsöffnung (20_{2A}) des zweiten Strömungsteilers (20₂) entsprechende Meßrohrlänge, L₁₈, jedes der Meßrohre (18₁) 1000 mm oder mehr beträgt,
--wobei jedes der vier Meßrohre jeweils ein wenigstens 40% der Meßrohrlänge, L₁₈, ausmachendes Mittelsegment aufweist, in dem nämliches Meßrohr keine mechanische Verbindung mit einem anderen der Meßrohre aufweist und/oder in dem es relativ zu den anderen Meßrohren frei beweglich ist,
-- wobei die Rohranordnung einen natürlichen Biegeschwingungsmode erster Art aufweist,
--- in dem das erste Meßrohr und das zweite Meßrohr bezüglich der zweiten gedachten Längsschnittebene (YZ) gegengleiche, insb. komplanare und/oder bezüglich der zweiten gedachten Längsschnittebene (YZ) symmetrische, Biegeschwingungen um jeweils eine dem jeweiligen Meßrohr zugehörige statische Ruhelage ausführen, und
--- in dem das dritte Meßrohr und das vierte Meßrohr bezüglich der zweiten gedachten Längsschnittebene (YZ) gegengleiche, insb. komplanare und/oder bezüglich der zweiten gedachten Längsschnittebene (YZ) symmetrische, Biegeschwingungen um jeweils eine dem jeweiligen Meßrohr zugehörige statische Ruhelage ausführen, derart,
--- daß, bezüglich der zweiten gedachten Längsschnittebene (YZ), nämliche Biegeschwingungen des ersten Meßrohrs auch gegengleich zu nämlichen Biegeschwingungen des dritten Meßrohrs sind, und
--- daß, bezüglich der zweiten gedachten Längsschnittebene (YZ), nämliche Biegeschwingungen des zweiten Meßrohrs auch gegengleich zu nämlichen Biegeschwingungen des vierten Meßrohrs sind; und
- welche Umformer-Elektronik im Betrieb mittels wenigstens eines, insb. zumindest zeitweise periodischen, der Erregeranordnung zugeführten elektrischen Treibersignals, insb. mit einer veränderlichen maximalen Spannungshöhe und/oder einer veränderlichen maximalen Stromstärke, elektrische Erregerleistung in die Erregeranordnung einspeist;
--wobei die Erregeranordnung dafür eingerichtet ist, die elektrische Erregerleistung zumindest anteilig sowohl in Biegeschwingungen des ersten Meßrohrs (18₁) und zu den Biegeschwingungen des ersten Meßrohrs (18₁) bezüglich der zweiten gedachten Längsschnittebene (YZ) der Rohranordnung gegengleiche, insb. komplanare, Biegeschwingungen des zweiten Meßrohrs (18₂) als auch in Biegeschwingungen des dritten Meßrohrs (18₁) und zu den Biegeschwingungen des dritten Meßrohrs (18₃) bezüglich der zweiten gedachten Längsschnittebene (YZ) der Rohranordnung gegengleiche Biegeschwingungen des vierten Meßrohrs (18₄) zu wandeln, derart, daß die vier Meßrohre, angeregt von der Erregeranordnung, zumindest anteilig Biegeschwingungen im Biegeschwingungsgrundmode erster Art ausführen,
- und wobei die Vibrationssensoranordnung (19) mittels eines elektrodynamischen einlaßseitigen ersten Schwingungssensors (19₁) sowie eines elektrodynamischen auslaßseitigen zweiten Schwingungssensors (19₂) und mittels eines elektrodynamischen einlaßseitigen dritten Schwingungssensors (19₃) sowie eines elektrodynamischen auslaßseitigen vierten Schwingungssensors (19₄) gebildet ist.

2. Meßsystem nach einem der vorherigen Ansprüche,
- wobei das Mittelsegment jedes der vier Meßrohre (18₁, 18₂, 18₃, 18₄) wenigstens 60% der Meßrohrlänge, L₁₈, und/oder weniger als 90% der Meßrohrlänge, L₁₈, des jeweiligen Meßrohrs ausmacht; und/oder
- wobei die Meßrohrlänge, L₁₈, jedes der Meßrohr (18₁, 18₂, 18₃, 18₄) mehr als 1200 mm und/oder weniger als 2500 mm beträgt; und/oder
- wobei eine einem minimalen Abstand zwischen der ersten Strömungsöffnung (20_{1A}) des ersten Strömungsteilers (20₁) und der ersten Strömungsöffnung (20_{2A}) des zweiten Strömungsteilers (20₂) entsprechende Meßrohrlänge, L₁₈, des ersten Meßrohrs (18₁) mehr als 1000 mm, insb. mehr als 1200 mm und/oder weniger als 2000 mm, beträgt; und/oder
- wobei jedes der vier Meßrohre einen Biegeschwingungsgrundmode von minimaler Biegeschwingungs-Resonanzfrequenz, f₁₈₁; f₁₈₂; f₁₈₃; f₁₈₄, aufweist, wobei die minimalen Biegeschwingungs-Resonanzfrequenzen, f₁₈₁, f₁₈₂, f₁₈₃, f₁₈₄, aller vier Meßrohre (18₁, 18₂, 18₃, 18₄) im wesentlichen gleich sind.

3. Meßsystem nach einem der vorherigen Ansprüche,
-- wobei die Rohranordnung einen natürlichen Biegeschwingungsmode zweiter Art aufweist,
--- in dem das erste Meßrohr und das zweite Meßrohr bezüglich der zweiten gedachten Längsschnittebene (YZ) gegengleiche, insb. bezüglich der zweiten gedachten Längsschnittebene (YZ) symmetrische, Biegeschwingungen um jeweils eine dem jeweiligen Meßrohr zugehörige statische Ruhelage ausführen, und
--- in dem das dritte Meßrohr und das vierte Meßrohr bezüglich der zweiten gedachten Längsschnittebene (YZ) gegengleiche, insb. bezüglich der zweiten gedachten Längsschnittebene (YZ) symmetrische, Biegeschwingungen um jeweils eine dem jeweiligen Meßrohr zugehörige statische Ruhelage ausführen, derart,
--- daß, bezüglich der zweiten gedachten Längsschnittebene (YZ), nämliche Biegeschwingungen des ersten Meßrohrs auch gegengleich zu nämlichen Biegeschwingungen des vierten Meßrohrs sind, und
--- daß, bezüglich der zweiten gedachten Längsschnittebene (YZ), nämliche Biegeschwingungen des zweiten Meßrohrs auch gegengleich zu nämlichen Biegeschwingun.gen des dritten Meßrohrs sind.

4. Meßsystem nach dem vorherigen Anspruch,
- wobei eine, insb. bei vollständig mit Wasser gefüllter Rohranordnung meßbare, Eigenfrequenz, f_{18V}; des Biegeschwingungsmode erster Art von einer, insb. bei vollständig mit Wasser gefüllter Rohranordnung und/oder zeitgleich zur Eigenfrequenz, f_{18V}, des Biegeschwingungsmode erster Art meßbaren, Eigenfrequenz, f_{18X}; des Biegeschwingungsmode zweiter Art, insb. um mehr als 10Hz, verschieden ist, insb. derart, daß, nämliche Eigenfrequenz, f_{18V}; des Biegeschwingungsmode erster Art um mehr als 10Hz größer als nämliche Eigenfrequenz, f_{18X};des Biegeschwingungsmode zweiter Art ist oder daß nämliche Eigenfrequenz, f_{18V}; des Biegeschwingungsmode erster Art um mehr als 10Hz kleiner als nämliche Eigenfrequenz, f_{18X}, des Biegeschwingungsmode zweiter Art ist; und/oder
- wobei die Erregeranordnung derart ausgebildet ist, daß damit der Biegeschwingungsmode zweiter Art, insb. simultan zum Biegeschwingungsmode erster Art, anregbar ist.

5. Meßsystem nach einem der vorherigen Ansprüche, wobei jedes der vier Meßrohre (18₁, 18₂, 18₃, 18₄) ein Kaliber, D₁₈, aufweist, das mehr als 60 mm, insb. mehr als 80 mm, beträgt.

6. Meßsystem nach einem der vorherigen Ansprüche,
- wobei der erste Strömungsteiler (20₁) einen Flansch (6₁) zum Anschließen des Meßaufnehmers an ein dem Zuführen von Medium zum Meßaufnehmer dienendes Rohrsegment der Rohrleitung und der zweite Strömungsteiler (20₂) einen Flansch (6₂) zum Anschließen des Meßaufnehmers an ein dem Abführen von Medium vom Meßaufnehmer dienendes Rohrsegment der Rohrleitung aufweisen;
- und wobei jeder der, insb. jeweils eine Masse von mehr als 50 kg aufweisenden, Flansche (6₁, 62) jeweils eine Dichtfläche (6_{1A}, 6_{2A}) zum fluiddichten Verbinden des Meßaufnehmers mit dem jeweils korrespondierenden Rohrsegment der Rohrleitung aufweist, und wobei ein Abstand zwischen den Dichtflächen (6_{1A}, 6_{2A}) beider Flansche (6₁, 6₂) eine, insb. mehr als 1200 mm betragende und/oder weniger als 3000 mm betragende, Einbaulänge, L₁₁, des Meßaufnehmers definiert.

7. Meßsystem nach einem der vorherigen Ansprüche,
- wobei eine nominellen Nennweite, D₁₁, des Meßaufnehmers, die einem Kaliber der Rohrleitung, in deren Verlauf der Meßaufnehmer einzusetzen ist, entspricht, mehr als 100 mm beträgt, insb. größer als 300 mm ist.

8. Meßsystem nach einem der vorherigen Ansprüche, wobei die Erregeranordnung (5)
- wenigstens einen, insb. differentiell, auf das erste und zweite Meßrohr wirkenden, insb. daran fixierten und/oder elektro-dynamischen, ersten Schwingungserreger zum Konvertieren von mittels der Umformer-Elektronik in die Erregeranordnung eingespeister elektrischer Erregerleistung in, insb. mit wenigstens einer mit einer einer Eigenfrequenz eines natürlichen Schwingungsmodes der Rohranordnung entsprechenden Signalfrequenz veränderliche und/oder periodische, Biegeschwingungen des ersten Meßrohrs (18₁) und in zu nämlichen Biegeschwingungen des ersten Meßrohrs (18₁) bezüglich der zweiten gedachten Längsschnittebene (YZ) der Rohranordnung gegengleiche Biegeschwingungen des zweiten Meßrohrs (18₂) bewirkende mechanische Erregerkräfte, sowie
- wenigstens einen, insb. differentiell, auf das dritte und vierte Meßrohr wirkenden, insb. daran fixierten und/oder elektro-dynamischen und/oder zum ersten Schwingungserreger baugleichen und/oder mit dem ersten Schwingungserreger elektrisch seriell verschalteten, zweiten Schwingungserreger zum Konvertieren von mittels der Umformer-Elektronik in die Erregeranordnung eingespeister elektrischer Erregerleistung in, insb. mit wenigstens einer mit einer einer Eigenfrequenz eines natürlichen Schwingungsmodes der Rohranordnung entsprechenden Signalfrequenz veränderliche und/oder periodische, Biegeschwingungen des dritten Meßrohrs (18₁) und zu nämlichen Biegeschwingungen des dritten Meßrohrs (18₁) bezüglich der zweiten gedachten Längsschnittebene (YZ) der Rohranordnung gegengleiche Biegeschwingungen des vierten Meßrohrs (18₂) bewirkende mechanische Erregerkräfte aufweist.

9. Meßsystem nach einem der vorherigen Ansprüche,
- wobei die vier Strömungsöffnungen (20_{1A}, 20_{1B}, 20_{1C}, 20_{1D}) des ersten Strömungsteilers (20₂) so angeordnet sind, daß zu, insb. kreisförmigen, Querschnittsflächen der Strömungsöffnungen (20_{1A}; 20_{1B}; 20_{1C}; 20_{1D}) des ersten Strömungsteilers (20₁) zugehörige gedachte Flächenschwerpunkte die Eckpunkte eines gedachten Quadrats bilden, wobei nämliche Querschnittsflächen in einer gemeinsamen gedachten, senkrecht zu einer, insb. zu einer Hauptströmungsachse des Meßaufnehmers parallelen, Längsachse des Meßaufnehmers verlaufenden Schnittebene des ersten Strömungsteilers (20₁) liegen; und
- wobei die vier Strömungsöffnungen (20_{2A}, 20_{2B}, 20_{2C}, 20_{2D}) des zweiten Strömungsteilers (20₂) so angeordnet sind, daß zu, insb. kreisförmigen, Querschnittsflächen der Strömungsöffnungen (20_{2A}; 20_{2B}; 20_{2C}; 20_{2D}) des zweiten Strömungsteilers (20₂) zugehörige gedachte Flächenschwerpunkte die Eckpunkte eines gedachten Quadrats bilden, wobei nämliche Querschnittsflächen in einer gemeinsamen gedachten, senkrecht zu einer, insb. zu einer Hauptströmungsachse des Meßaufnehmers parallelen, Längsachse des Meßaufnehmers verlaufenden Schnittebene des zweiten Strömungsteilers (20₂) liegen.

10. Verwenden eines Meßsystems gemäß einem der vorherigen Ansprüche zum Messen einer Dichte und/oder einer Massendurchflußrate, insb. auch eines über ein Zeitintervall totalisierten Gesamt-Massendurchflusses, und/oder einer Viskosität und/oder einer Reynoldszahl eines in einer Prozeßleitung, insb. einer Rohrleitung, zumindest zeitweise mit einer Massendurchflußrate von mehr als 400 t/h, insb. mehr als 1500 t/h, strömenden Mediums, insb. eines Gases, einer Flüssigkeit, eines Pulvers oder eines anderen strömungsfähigen Stoffes.

## Claims

1. Measuring system designed to measure a density and/or a mass flow rate, particularly also a total mass flow rate totalized over a time interval and/or a viscosity, of a medium flowing at least temporarily through a pipe, wherein said measuring system comprises a vibronic-type sensor to generate vibration measuring signals, and a transducer electronics unit that is electrically coupled to the sensor which is designed to control the sensor and to evaluate vibration measuring signals supplied by the sensor,
- wherein said sensor comprises
-- a sensor housing (7₁), wherein a first housing end on the inlet side is formed by a first flow divider (20₁), located on the inlet side and having exactly four flow openings (20_{1A}, 20_{1B}, 20_{1C}, 20_{1D}) that are spaced at a distance from one another, and wherein a second housing end on the outlet side is formed by a second flow divider (20₂), located on the outlet side and having exactly four flow openings (20_{2A}, 20_{2B}, 20_{2C}, 20_{2D}) that are spaced at a distance from one another,
-- a pipe arrangement with precisely four straight, identically designed measuring tubes (18₁, 18₂, 18₃, 18₄) that form flow paths which are coupled in parallel from a flow perspective and are connected to the flow dividers (20₁, 20₂), said tubes being designed to conduct flowing medium, wherein of said tubes
--- a first measuring tube (18₁) enters into a first flow opening (20_{1A}) of the first flow divider (20₁) with a first measuring tube end on the inlet side and enters into a first flow opening (20_{2A}) of the second flow divider (20₂) with a second measuring tube end on the outlet side,
-- a second measuring tube (18₂) enters into a second flow opening (20_{1B}) of the first flow divider (20₁) with a first measuring tube end on the inlet side and enters into a second flow opening (20_{2B}) of the second flow divider (20₂) with a second measuring tube end on the outlet side,
-- a third measuring tube (18₃) enters into a third flow opening (20_{1C}) of the first flow divider (20₁) with a first measuring tube end on the inlet side and enters into a third flow opening (20_{2C}) of the second flow divider (20₂) with a second measuring tube end on the outlet side,
-- a fourth measuring tube (18₄) enters into a fourth flow opening (20_{1D}) of the first flow divider (20₁) with a first measuring tube end on the inlet side and enters into a fourth flow opening (20_{2D}) of the second flow divider (20₂) with a second measuring tube end on the outlet side,
-- an electromechanical exciter arrangement (5) designed to generate and/or maintain mechanical vibrations, particularly flexural vibrations, of the four measuring tubes (18₁, 18₂, 18₃, 18₄), and
-- a vibration sensor arrangement (19) reacting to vibrations of the measuring tubes (18₁, 18₂, 18₃, 18₄), said arrangement being formed by vibration sensors (19₁, 19₂, 19₃, 19₄) that are identical in design, wherein said arrangement is designed to generate vibration measuring signals representing vibrations, particularly flexural vibrations, of the measuring tubes (18₁, 18₂, 18₃, 18₄),
-- wherein the four straight measuring tubes are designed and arranged in the sensor in such a way
--- that the tube arrangement has a first imaginary longitudinal section plane (XZ) located between the first measuring tube and the third measuring tube and between the second measuring tube and the fourth measuring tube, wherein the tube arrangement is in mirror symmetry to said plane, and a second imaginary longitudinal section plane (YZ), which is perpendicular to the first imaginary longitudinal section plane (XZ) and extends between the first measuring tube and the second measuring tube and between the third measuring tube and the fourth measuring tube, wherein the tube arrangement is also in mirror symmetry to said plane, and
--- that a measuring tube length, L₁₈, - corresponding to a minimum distance between the flow opening (20_{1A}) of the first flow divider (20₁), said opening corresponding to the first measuring tube end, on the inlet side, and the flow opening (20_{2A}) of the second flow divider (20₂), said opening corresponding to the second measuring tube end, on the outlet side - of each of the measuring tubes (18₁) is 1000 mm or more,
-- wherein each of the four measuring tubes has a middle segment accounting for at least 40 % of the measuring tube length, L₁₈, wherein in said segment the measuring tube does not have any mechanical connection with another one of the measuring tubes and/or wherein in said segment the measuring tube can move freely in relation to the other measuring tubes,
-- wherein the tube arrangement has a natural flexural vibration mode of the first type,
--- in which the first measuring tube and the second measuring tube perform flexural vibrations - which are mirror-inverted with respect to the second imaginary longitudinal section plane (YZ), particularly coplanar and/or symmetrical in relation to the second imaginary longitudinal section plane (YZ) - around a static rest position pertaining to the respective measuring tube, and
--- in which the third measuring tube and the fourth measuring tube perform flexural vibrations - which are mirror-inverted with respect to the second imaginary longitudinal section plane (YZ), particularly coplanar and/or symmetrical in relation to the second imaginary longitudinal section plane (YZ) - around a static rest position pertaining to the respective measuring tube, in such a way that
--- in relation to the second imaginary longitudinal section plane (YZ), said flexural vibrations of the first measuring tube are also mirror-inverted with respect to said flexural vibrations of the third measuring tube, and
--- in relation to the second imaginary longitudinal section plane (YZ), said flexural vibrations of the second measuring tube are also mirror-inverted with respect to said flexural vibrations of the fourth measuring tube; and
- wherein, during operation, the transducer electronics unit supplies electrical excitation power to the exciter arrangement by means of at least an electrical driver signal that is supplied to the excitation arrangement and is particularly at least temporarily periodical, particularly with a variable maximum voltage level and/or a variable maximum current intensity;
-- wherein the excitation arrangement is designed to convert the electrical excitation power at least partially both into flexural vibrations of the first measuring tube (18₁) and into flexural vibrations of the second measuring tube (18₂), which are mirror-inverted with respect to the flexural vibrations of the first measuring tube (18₁) in relation to the second imaginary longitudinal section plane (YZ) of the tube arrangement, particularly coplanar, and into flexural vibrations of the third measuring tube (18₃) and flexural vibrations of the fourth measuring tube (18₄) which are mirror-inverted with respect to the flexural vibrations of the third measuring tube (18₃) in relation to the second imaginary longitudinal section plane (YZ) of the tube arrangement, in such a way that the four measuring tubes, excited by the excitation arrangement, at least partially perform flexural vibrations in the flexural vibration basic mode of the first type,
- and wherein the vibration sensor arrangement (19) is formed by a first electrodynamic vibration sensor (19₁) on the inlet side and a second electrodynamic vibration sensor (19₂) on the outlet side, and by a third electrodynamic vibration sensor (19₃) on the inlet side and a fourth electrodynamic vibration sensor (19₄) on the outlet side.

2. Measuring system as claimed in one of the previous claims,
- wherein the middle segment of each of the four measuring tubes (18₁, 18₂, 18₃, 18₄) accounts for at least 60 % of the measuring tube length, L₁₈, and/or less than 90 % of the measuring tube length, L₁₈, of the respective measuring tube; and/or
- wherein the measuring tube length, L₁₈, of each of the measuring tubes (18₁, 18₂, 18₃, 18₄) is greater than 1200 mm and/or less than 2500 mm; and/or
- wherein a measuring tube length, L₁₈, of the first measuring tube (18₁) corresponding to a minimum distance between the first flow opening (20_{1A}) of the first flow divider (20₁) and the first flow opening (20_{2A}) of the second flow divider (20₂) is greater than 1000 mm, particularly greater than 1200 mm and/or less than 2000 mm; and/or
- wherein each of the four measuring tubes has a flexural vibration basic mode of a minimum flexural vibration resonance frequency, f₁₈₁ ; f₁₈₂ ; f₁₈₃ ; f₁₈₄, wherein the minimum flexural vibration resonance frequencies, f₁₈₁, f₁₈₂, f₁₈₃, f₁₈₄, of all four measuring tubes (18₁, 18₂, 18₃, 18₄) are essentially the same.

3. Measuring system as claimed in one of the previous claims,
-- wherein the tube arrangement has a natural flexural vibration mode of the second type,
--- in which the first measuring tube and the second measuring tube perform flexural vibrations, which are mirror-inverted with respect to the second imaginary longitudinal section plane (YZ), particularly flexural vibrations that are symmetrical in relation to the second imaginary longitudinal section plane (YZ), around a static rest position pertaining to the respective measuring tube, and
--- in which the third measuring tube and the fourth measuring tube perform flexural vibrations, which are mirror-inverted with respect to the second imaginary longitudinal section plane (YZ), particularly flexural vibrations that are symmetrical in relation to the second imaginary longitudinal section plane (YZ), around a static rest position pertaining to the respective measuring tube, in such a way that
--- in relation to the second imaginary longitudinal section plane (YZ), said flexural vibrations of the first measuring tube are also mirror-inverted with respect to said flexural vibrations of the fourth measuring tube, and
--- in relation to the second imaginary longitudinal section plane (YZ), said flexural vibrations of the second measuring tube are also mirror-inverted with respect to said flexural vibrations of the third measuring tube.

4. Measuring system as claimed in the previous claim,
- wherein a natural frequency, f_{18V}, of the flexural vibration mode of the first type, which can be measured particularly when the pipe arrangement is filled with water is different from a natural frequency, f_{18X}, of the flexural vibration mode of the second type, particularly by more than 10 Hz, said frequency being measurable particularly when the pipe arrangement is filled with water and/or simultaneously with the natural frequency, f_{18V}, of the flexural vibration mode of the first type, particularly in such a way that said natural frequency, f_{18V}, of the flexural vibration mode of the first type is more than 10 Hz greater than said natural frequency, f_{18X}, of the flexural vibration mode of the second type or that said natural frequency, f_{18V}, of the flexural vibration mode of the first type is over 10 Hz less than said natural frequency, f_{18X}, of the flexural vibration mode of the second type, and/or
- wherein the excitation arrangement is designed in such a way that the flexural vibration mode of the second type can be excited particularly simultaneously with the flexural vibration mode of the first type.

5. Measuring system as claimed in one of the previous claims, wherein each of the four measuring tubes (18₁, 18₂, 18₃, 18₄) has a caliber, D₁₈, which is greater than 60 mm, particularly greater than 80 mm.

6. Measuring system as claimed in one of the previous claims,
- wherein the first flow divider (20₁) has a flange (6₁) for the purpose of connecting the sensor to a pipe segment serving to supply medium to the sensor, and the second flow divider (20₂) has a flange (6₂) for the purpose of connecting the sensor to a pipe segment serving to take medium away from the sensor;
- and wherein each of the flanges (6₁, 6₂), particularly each having a mass of more than 50 kg, has a sealing surface (6_{1A}, 6_{2A}) designed to connect, in a fluid-tight manner, the sensor with the corresponding segment of the pipe, and wherein a distance between the sealing surfaces (6_{1A}, 6_{2A}) of the two flanges (6₁, 6₂) defines an installation length, L₁₁, of the sensor, which is particularly greater than 1200 mm and/or less than 3000 mm.

7. Measuring system as claimed in one of the previous claims,
- wherein a nominal diameter, D₁₁, of the sensor which corresponds to a caliber of the pipe in the course of which the sensor is to be inserted, is greater than 100 mm, particularly greater than 300 mm.

8. Measuring system as claimed in one of the previous claims, wherein the excitation arrangement (5)
- comprises at least a first vibration exciter acting, particularly in a differential manner, on the first and the second measuring tube, wherein said first exciter is particularly fixed on said tubes and/or is electrodynamic, for the purpose of converting electrical excitation power, fed into the excitation arrangement by means of the transducer electronics unit, into mechanical forces that cause flexural vibrations of the first measuring tube (18₁) which are periodic and/or variable with at least a signal frequency corresponding to a natural frequency of a natural vibration mode of the tube arrangement, and that cause flexural vibrations of the second measuring tube (18₂), which are mirror-inverted with respect to said flexural vibrations of the first measuring tube (18₁) in relation to the second imaginary longitudinal section plane (YZ) of the tube arrangement, and
- comprises at least a second vibration exciter acting, particularly in a differential manner, on the third and fourth measuring tube, wherein said second exciter is particularly fixed on said tubes and/or is electrodynamic and/or has an identical design to the first vibration exciter and/or is switched electrically in series with the first vibration exciter, for the purpose of converting electrical excitation power, fed into the excitation arrangement by means of the transducer electronics unit, into mechanical forces that cause flexural vibrations of the third measuring tube (18₃) which are periodic and/or variable with at least a signal frequency corresponding to a natural frequency of a natural vibration mode of the tube arrangement, and that cause flexural vibrations of the fourth measuring tube (18₄), which are mirror-inverted with respect to said flexural vibrations of the third measuring tube (18₃) in relation to the second imaginary longitudinal section plane (YZ) of the tube arrangement.

9. Measuring system as claimed in one of the previous claims,
- wherein the four flow openings (20_{1A}, 20_{1B}, 20_{1C}, 20_{1D}) of the first flow divider (20₁) are arranged in such a way that imaginary centroids pertaining to cross-sectional areas, particularly circular, of the flow openings (20_{1A}, 20_{1B}, 20_{1C}, 20_{1D}) of the first flow divider (20₁) form the corners of an imaginary square, wherein said cross-sectional areas are located on a common imaginary sectional plane of the first flow divider (20₁), said plane being perpendicular to a longitudinal axis of the sensor, particularly parallel to a primary flow axis of the sensor; and
- wherein the four flow openings (20_{2A}, 20_{2B}, 20_{2C}, 20_{2D}) of the second flow divider (20₂) are arranged in such a way that imaginary centroids pertaining to cross-sectional areas, particularly circular, of the flow openings (20_{2A}, 20_{2B}, 20_{2C}, 20_{2D}) of the second flow divider (20₂) form the corners of an imaginary square, wherein said cross-sectional areas are located on a common imaginary sectional plane of the second flow divider (20₂), said plane being perpendicular to a longitudinal axis of the sensor, particularly parallel to a primary flow axis of the sensor.

10. Use of a measuring system as claimed in one of the previous claims to measure a density and/or a mass flow rate, particularly a total mass flow totalized over a time interval, and/or a viscosity and/or a Reynolds number of a medium flowing through a process pipe, particularly a pipeline, at least temporarily with a mass flow rate of more than 400 t/h, particularly more than 1500 t/h, particularly a gas, a liquid, a powder or another substance that cam flow.

## Revendications

1. Système de mesure destiné à la mesure d'une masse volumique et/ou d'un débit massique, notamment également d'un débit massique total, totalisé sur un intervalle de temps, et/ou d'une viscosité d'un produit s'écoulant au moins temporairement dans une conduite, lequel système de mesure comprend un capteur du type à vibrations destiné à la génération de signaux de mesure de vibration, ainsi qu'une électronique de transmetteur couplée électriquement au capteur, laquelle électronique est destinée à la commande du capteur ainsi qu'à l'exploitation des signaux de mesure de vibration fournis par le capteur,
- lequel capteur comprend
-- un boîtier de capteur (7₁), dont une première extrémité de boîtier côté entrée est constituée d'un premier diviseur de débit (20₁), côté entrée, comportant exactement quatre ouvertures d'écoulement (20_{1A}, 20_{1B}, 20_{1C}, 20_{1D}) espacées les unes des autres, et dont une deuxième extrémité de boîtier côté sortie est constituée d'un deuxième diviseur de débit (20₂), côté sortie, comportant exactement quatre ouvertures d'écoulement (20_{2A}, 20_{2B}, 20_{2C}, 20_{2D}) espacées les unes des autres,
-- un agencement de tubes avec exactement quatre tubes de mesure (18₁, 18₂, 18₃, 18₄) droits, de conception identique, formant en terme d'écoulement des chemins d'écoulement commandés en parallèle, raccordés aux diviseurs de débit (20₁, 20₂), lesquels tubes sont destinés à guider le produit en écoulement, parmi lesquels tubes
--- un premier tube de mesure (18₁) débouche avec une première extrémité de tube, côté entrée, dans une première ouverture d'écoulement (20_{1A}) du premier diviseur de débit (20₁) et avec une deuxième extrémité de tube, côté sortie, dans une première ouverture d'écoulement (20_{2A}) du deuxième diviseur de débit (20₂),
--- un deuxième tube de mesure (18₂) débouche avec une première extrémité de tube, côté entrée, dans une deuxième ouverture d'écoulement (20_{1B}) du premier diviseur de débit (20₁) et avec une deuxième extrémité de tube, côté sortie, dans une deuxième ouverture d'écoulement (20_{2B}) du deuxième diviseur de débit (20₂),
--- un troisième tube de mesure (18₃) débouche avec une première extrémité de tube, côté entrée, dans une troisième ouverture d'écoulement (20_{1C}) du premier diviseur de débit (20₁) et avec une deuxième extrémité de tube, côté sortie, dans une troisième ouverture d'écoulement (20_{2C}) du deuxième diviseur de débit (20₂),
--- un quatrième tube de mesure (18₄) débouche avec une première extrémité de tube, côté entrée, dans une quatrième ouverture d'écoulement (20_{1D}) du premier diviseur de débit (20₁) et avec une deuxième extrémité de tube, côté sortie, dans une quatrième ouverture d'écoulement (20_{2D}) du deuxième diviseur de débit (20₂),
-- un circuit d'excitation électromécanique (5) destiné à la génération et/ou au maintien des vibrations mécaniques, notamment des vibrations de flexion, des quatre tubes de mesure (18₁, 18₂, 18₃, 18₄), ainsi que
-- un agencement de capteurs de vibration (19) réagissant aux vibrations des tubes de mesure (18₁, 18₂, 18₃, 18₄), lequel agencement est notamment constitué de capteurs de vibration (19₁, 19₂, 19₃, 19₄) de conception identique et est destiné à la génération de signaux de mesure de vibration représentant les vibrations, notamment les vibrations de flexion, des tubes de mesure (18₁, 18₂, 18₃, 18₄),
-- les quatre tubes de mesure droits étant conçus et disposés dans le capteur de telle sorte
--- que l'agencement de tubes présente un premier plan de coupe longitudinal imaginaire (XZ) situé entre le premier tube de mesure et le troisième tube de mesure et également entre le deuxième tube de mesure et le quatrième tube de mesure, plan par rapport auquel l'agencement de tubes est en symétrie spéculaire, ainsi qu'un deuxième plan de coupe longitudinal imaginaire (YZ), lequel est perpendiculaire au premier plan de coupe longitudinal imaginaire (XZ) et lequel s'étend entre le premier tube de mesure et le troisième tube de mesure et également entre le deuxième tube de mesure et le quatrième tube de mesure, plan par rapport auquel l'agencement de tubes est également en symétrie spéculaire, et
--- qu'une longueur de tube de mesure, L₁₈, - correspondant à une distance minimale entre l'ouverture d'écoulement (20_{1A}) du premier diviseur de débit (20₁), laquelle ouverture correspond avec la première extrémité respective, côté entrée, du tube de mesure, et l'ouverture d'écoulement (20_{2A}) du deuxième diviseur de débit (20₂), laquelle ouverture correspond avec la deuxième extrémité respective, côté sortie, du tube de mesure - de chacun des tubes de mesure (18₁) est supérieure ou égale à 1 000 mm,
-- chacun des quatre tubes de mesure présentant un segment médian représentant au moins 40 % de la longueur de tube de mesure, L₁₈, segment dans lequel le tube de mesure ne présente aucune liaison mécanique avec l'un des autres tubes de mesure et/ou segment dans lequel le tube de mesure est totalement libre par rapport aux autres tubes de mesure,
-- l'agencement de tubes présentant un mode de vibration de flexion naturel de premier type,
--- dans lequel le premier tube de mesure et le deuxième tube de mesure exécutent des vibrations de flexion opposées par rapport au deuxième plan de coupe longitudinal imaginaire (YZ), notamment coplanaires et/ou symétriques par rapport au deuxième plan de coupe longitudinal imaginaire (YZ), autour d'une position de repos statique associée au tube de mesure respectif, et
--- dans lequel le troisième tube de mesure et le quatrième tube de mesure exécutent des vibrations de flexion opposées par rapport au deuxième plan de coupe longitudinal imaginaire (YZ), notamment coplanaires et/ou symétriques par rapport au deuxième plan de coupe longitudinal imaginaire (YZ), autour d'une position de repos statique associée au tube de mesure respectif, de telle sorte
--- que, par rapport au deuxième plan de coupe longitudinal imaginaire (YZ), les dites vibrations de flexion du premier tube de mesure sont également opposées aux vibrations de flexion du troisième tube de mesure, et
--- que, par rapport au deuxième plan de coupe longitudinal imaginaire (YZ), les dites vibrations de flexion du deuxième tube de mesure sont également opposées aux vibrations de flexion du quatrième tube de mesure ; et
- laquelle électronique de transmetteur injecte, en fonctionnement, la puissance d'excitation électrique dans le circuit d'excitation au moyen d'au moins un signal d'attaque électrique acheminé au circuit d'excitation, lequel signal est notamment au minimum temporairement périodique, notamment avec un niveau de tension maximal variable et/ou une intensité de courant maximale variable ;
-- le circuit d'excitation étant conçu pour convertir la puissance d'excitation électrique au moins partiellement en vibrations de flexion du premier tube de mesure (18₁) et en vibrations de flexion du deuxième tube de mesure (18₂), notamment coplanaires, opposées aux vibrations de flexion du premier tube de mesure (18₁) par rapport au deuxième plan de coupe longitudinal imaginaire (YZ) de l'agencement de tubes, et également en vibrations de flexion du troisième tube de mesure (18₃) et en vibrations de flexion du quatrième tube de mesure (18₄) opposées aux vibrations de flexion du troisième tube de mesure (18₃) par rapport au deuxième plan de coupe longitudinal imaginaire (YZ) de l'agencement de tubes, de telle sorte que les quatre tubes de mesure, excités par le circuit d'excitation, exécutent au moins partiellement des vibrations de flexion dans le mode fondamental de vibration de flexion,
- et l'agencement de capteurs de vibrations (19) étant constitué au moyen d'un premier capteur de vibrations électrodynamique (19₁) côté entrée ainsi que d'un deuxième capteur de vibrations électrodynamique (19₂) côté sortie, et au moyen d'un troisième capteur de vibrations électrodynamique (19₃) côté entrée ainsi que d'un quatrième capteur de vibrations électrodynamique (19₄) côté sortie.

2. Système de mesure selon l'une des revendications précédentes,
- pour lequel le segment médian de chacun des quatre tubes de mesure (18₁, 18₂, 18₃, 18₄) représente au moins 60 % de la longueur du tube de mesure, L₁₈, et/ou moins de 90 % de la longueur du tube de mesure, L₁₈, du tube de mesure respectif ; et/ou
- pour lequel la longueur du tube de mesure, L₁₈, de chacun des tubes de mesure (18₁, 18₂, 18₃, 18₄) est supérieure à 1 200 mm et/ou inférieure à 2 500 mm ; et/ou
- pour lequel une longueur de tube de mesure, L₁₈, du premier tube de mesure (18₁) correspondant à une distance minimale entre la première ouverture d'écoulement (20_{1A}) du premier diviseur de débit (20₁) et la première ouverture d'écoulement (20_{2A}) du deuxième diviseur de débit (20₂) est supérieure à 1 000 mm, notamment supérieure à 1 200 mm et/ou inférieure à 2 000 mm ; et/ou
- pour lequel chacun des quatre tubes de mesure présente un mode de vibration de flexion fondamental de fréquence de résonance de vibration de flexion minimale, f₁₈₁ ; f₁₈₂ ; f₁₈₃ ; f₁₈₄, les fréquences de résonance de vibration de flexion minimale, f₁₈₁, f₁₈₂, f₁₈₃, f₁₈₄, de tous les quatre tubes de mesure (18₁, 18₂, 18₃, 18₄) étant pour l'essentiel égales.

3. Système de mesure selon l'une des revendications précédentes,
-- pour lequel l'agencement de tubes présente un mode de vibration de flexion naturel de second type,
--- dans lequel le premier tube de mesure et le deuxième tube de mesure exécutent des vibrations de flexion opposées par rapport au deuxième plan de coupe longitudinal imaginaire (YZ), notamment des vibrations de flexion symétriques par rapport au deuxième plan de coupe longitudinal imaginaire (YZ), autour d'une position de repos statique associée au tube de mesure respectif, et
--- dans lequel le troisième tube de mesure et le quatrième tube de mesure exécutent des vibrations de flexion opposées par rapport au deuxième plan de coupe longitudinal imaginaire (YZ), notamment des vibrations de flexion symétriques par rapport au deuxième plan de coupe longitudinal imaginaire (YZ), autour d'une position de repos statique associée au tube de mesure respectif, de telle sorte
--- que, par rapport au deuxième plan de coupe longitudinal imaginaire (YZ), ces mêmes vibrations de flexion du premier tube de mesure sont également opposées à ces mêmes vibrations de flexion du quatrième tube de mesure, et
--- que, par rapport au deuxième plan de coupe longitudinal imaginaire (YZ), ces mêmes vibrations de flexion du deuxième tube de mesure sont également opposées à ces mêmes vibrations de flexion du troisième tube de mesure.

4. Système de mesure selon la revendication précédente,
- pour lequel une fréquence propre, f_{18V}, du mode de vibration de flexion de premier type, laquelle fréquence peut être mesurée, notamment avec un agencement de tubes complètement rempli d'eau, diffère d'une fréquence propre, f_{18X}, du mode de vibration de flexion de second type, notamment de plus de 10 Hz, laquelle fréquence peut être mesurée, notamment avec un agencement de tubes complètement rempli d'eau et/ou simultanément avec la fréquence propre, f_{18V}, du mode de vibration de flexion de premier type, notamment de telle sorte que ladite fréquence propre, f_{18V}, du mode de vibration de flexion de premier type soit supérieure de plus de 10 Hz à ladite fréquence propre, f_{18X}, du mode de vibration de flexion de second type ou que ladite fréquence propre, f_{18V}, du mode de vibration de flexion de premier type soit inférieure de plus de 10 Hz à ladite fréquence propre, f_{18X}, du mode de vibration de flexion de second type, et/ou
- pour lequel le circuit d'excitation est conçu de telle sorte que le mode de vibration de flexion de second type puisse être excité, notamment simultanément avec le mode de vibration de flexion de premier type.

5. Système de mesure selon l'une des revendications précédentes, pour lequel chacun des quatre tubes de mesure (18₁, 18₂, 18₃, 18₄) présente un calibre, D₁₈, qui est supérieur à 60 mm, notamment supérieur à 80 mm.

6. Système de mesure selon l'une des revendications précédentes,
- pour lequel le premier diviseur de débit (20₁) présente une bride (6₁) pour le raccordement du capteur à un segment de tube de la conduite servant à l'alimentation de produit vers le capteur, et le deuxième diviseur de débit (20₂) présente une bride (6₂) pour le raccordement du capteur à un segment de tube de la conduite servant à l'évacuation du produit à partir du capteur ;
- et pour lequel chacune des brides (6₁, 6₂), notamment présentant chacune une masse supérieure à 50 kg, présente une surface d'étanchéité (6_{1A}, 6_{2A}) pour le raccordement étanche au produit du capteur au segment de tube respectivement correspondant de la conduite, et pour lequel une distance entre les surfaces d'étanchéité (6_{1A}, 6_{2A}) des deux brides (6₁, 6₂) définit une longueur de montage, L₁₁, du capteur, notamment supérieure à 1 200 mm et/ou inférieure à 3 000 mm.

7. Système de mesure selon l'une des revendications précédentes,
- pour lequel un diamètre nominal, D₁₁, du capteur correspondant à un calibre de la conduite, dans le tracé de laquelle le capteur doit être inséré, est supérieur à 100 mm, notamment supérieur à 300 mm.

8. Système de mesure selon l'une des revendications précédentes, pour lequel le circuit d'excitation (5)
- comprend au moins un premier excitateur de vibrations agissant, notamment de manière différentielle, sur le premier et le deuxième tube de mesure, lequel premier excitateur est notamment fixé sur ces mêmes tubes et/ou est électrodynamique, en vue de la conversion, au moyen de l'électronique de transmetteur, de la puissance d'excitation électrique injectée dans le circuit d'excitation, en vibrations de flexion du premier tube de mesure (18₁) périodiques et/ou variables avec une fréquence de signal correspondant à une fréquence propre d'un mode de vibration naturel de l'agencement de tubes, et en forces d'excitation mécaniques provoquant les vibrations de flexion du deuxième tube de mesure (18₂), qui sont opposées aux vibrations de flexion du premier tube de mesure (18₁) par rapport au deuxième plan de coupe longitudinal imaginaire (YZ) de l'agencement de tubes, ainsi que
- comprend au moins un deuxième excitateur de vibrations agissant, notamment de manière différentielle, sur le troisième et le quatrième tube de mesure, lequel deuxième excitateur est notamment fixé sur ces mêmes tubes et/ou est électrodynamique et/ou est de conception identique au premier excitateur de vibrations et/ou est couplé électriquement en série avec le premier excitateur de vibrations, en vue de la conversion, au moyen de l'électronique de transmetteur, de la puissance d'excitation électrique injectée dans le circuit d'excitation, en vibrations de flexion du troisième tube de mesure (18₃) périodiques et/ou variables avec une fréquence de signal correspondant à une fréquence propre d'un mode de vibration naturel de l'agencement de tubes, et en forces d'excitation mécaniques provoquant les vibrations de flexion du quatrième tube de mesure (18₄), qui sont opposées aux vibrations de flexion du troisième tube de mesure (18₃) par rapport au deuxième plan de coupe longitudinal imaginaire (YZ) de l'agencement de tubes.

9. Système de mesure selon l'une des revendications précédentes,
- pour lequel les quatre ouvertures d'écoulement (20_{1A}, 20_{1B}, 20_{1C}, 20_{1D}) du premier diviseur de débit (20₁) sont disposées de telle sorte que les centres de gravité surfaciques imaginaires, correspondants aux surfaces de section transversale des ouvertures d'écoulement (20_{1A}, 20_{1B}, 20_{1C}, 20_{1D}) du premier diviseur de débit (20₁), forment les points d'angle d'un carré imaginaire, lesdites surfaces de section transversale étant disposées dans un plan de coupe imaginaire commun du premier diviseur de débit (20₁), lequel plan s'étend perpendiculairement à un axe longitudinal du capteur, notamment parallèlement à un axe d'écoulement principal du capteur ; et
- pour lequel les quatre ouvertures d'écoulement (20_{2A}, 20_{2B}, 20_{2C}, 20_{2D}) du deuxième diviseur de débit (20₂) sont disposées de telle sorte que les centres de gravité surfaciques imaginaires, correspondants aux surfaces de section transversale des ouvertures d'écoulement (20_{2A}, 20_{2B}, 20_{2C}, 20_{2D}) du deuxième diviseur de débit (20₂), forment les points d'angle d'un carré imaginaire, lesdites surfaces de section transversale étant disposées dans un plan de coupe imaginaire commun du deuxième diviseur de débit (20₂), lequel plan s'étend perpendiculairement à un axe longitudinal du capteur, notamment parallèlement à un axe d'écoulement principal du capteur.

10. Utilisation d'un système de mesure selon l'une des revendications précédentes, lequel système est destiné à la mesure d'une masse volumique et/ou d'un débit massique, notamment également d'un débit massique total, totalisé sur un intervalle de temps, et/ou d'une viscosité et/ou d'un nombre de Reynolds d'un produit s'écoulant dans une conduite de process, notamment une conduite, au moins temporairement avec un débit massique supérieur à 400 t/h, notamment supérieur à 1 500 t/h, notamment un gaz, un liquide, une poudre ou une autre substance apte à s'écouler.
